# EUROPEAN PATENT APPLICATION

(11) **EP 4 852 390 A1**
(43) Date of publication of application: **09.12.2026**
(21) Application number: 26176039.1
(22) Date of filing: 01.05.2026
(51) Int. Cl.: H04L 41/40, H04W 4/00, H04W 24/08, H04W 12/06, H04W 24/02

(54) **SYSTEMS AND METHODS FOR GENERATING SLICE-SPECIFIC METRICS IN 5G WIRELESS COMMUNICATIONS NETWORKS USING PDU SESSION IDENTIFIERS**

(30) Priority: 04.06.2025 US 202519228441
(71) Applicant: NetScout Systems, Inc., Westford, MA 01886 (US)
(72) Inventor: LIUBINSKAS, TAURAS, Westford, Massachusetts, 01886 (US); MUTHUCHAMY, SUBAPPRIYA, Westford, Massachusetts, 01886 (US); BASS, BRANDON, Westford, Massachusetts, 01886 (US); PRASAD, SANDEEP, Westford, Massachusetts, 01886 (US); NEELAKANTAMURTHY, YASHOVAN, Westford, Massachusetts, 01886 (US); SARASWATI, ABHISHEK, Westford, Massachusetts, 01886 (US)
(74) Representative: Marks & Clerk LLP

(57) **Abstract**

A method including monitoring network slice registration messages exchanged between a mobile device and an access and mobility management function (AMF) including network slice identifiers, detecting a registration request message from the mobile device to the AMF including a registration request including a network slice identifier of the network slice identifiers, detecting a registration request response message from the AMF to the mobile device including a registration pending indication associated with the network slice identifier, detecting a configuration update command including a registration acceptance associated with the network slice identifier indicating registration of the mobile device for the network slice corresponding to the network slice identifier, and generating a data set including network slice registration events for a plurality of mobile devices, the network slice registration events including registration of the mobile device with the network slice.

## Description

### BACKGROUND

5G wireless networks allow for network slices, virtual wireless networks that use the underlying physical hardware of the 5G wireless network. User equipment (UE) can access network slices by registering with the network slice, being authenticated and authorized to use the network slice, and by using an identifier of the network slice in communications.

### BRIEF DESCRIPTION OF THE DRAWINGS

The accompanying drawings are not intended to be drawn to scale. Like reference numbers and designations in the various drawings indicate like elements. For purposes of clarity, not every component may be labeled in every drawing.
FIG. 1 is an illustration of a system, in accordance with an implementation;
FIG. 2 is an illustration of an example user interface or report indicating causes for connection failures within a network slice of a 5G wireless network;
FIG. 3 is an illustration of an example report generated using a data set containing slice-specific metrics;
FIG. 4 is a flow diagram of an example method for generating a data set including slice-specific metrics;
FIG. 5 is an illustration of an example user interface or report indicating causes for registration failures within a network slice of a 5G wireless network;
FIG. 6 is an illustration of an example report generated using a data set containing slice-specific registration metrics;
FIG. 7 is a flow diagram of an example method for generating a data set including slice-specific registration metrics;
FIG. 8A is a block diagram depicting an implementation of a network environment including a client device in communication with a server device;
FIG. 8B is a block diagram depicting a cloud computing environment including a client device in communication with cloud service providers; and
FIG. 8C is a block diagram depicting an implementation of a computing device that can be used in connection with the system depicted in FIGS. 1, 8A, and 8B and the methods depicted in FIGS. 2 and 3.

### DETAILED DESCRIPTION

In the following detailed description, reference is made to the accompanying drawings, which form a part hereof. In the drawings, similar symbols typically identify similar components, unless context dictates otherwise. The illustrative embodiments described in the detailed description, drawings, and claims are not meant to be limiting. Other embodiments may be utilized, and other changes may be made, without departing from the spirit or scope of the subject matter presented here. It will be readily understood that the aspects of the present disclosure, as generally described herein, and illustrated in the figures, can be arranged, substituted, combined, and designed in a wide variety of different configurations, all of which are explicitly contemplated and made part of this disclosure.

Monitoring network health of a wireless communication network is important to determine whether components of a network are operating correctly in order to rebalance component load, maintain components, and add new components. In an example, monitoring cell tower usage in a 5G network can allow for new towers to be added in areas of high usage. As noted above, 5G networks have the capability of including network slices, logical networks that provide specific network capabilities and network characteristics using the hardware of the underlying 5G network. These network slices can provide connectivity for specific devices, specific applications, or function as virtual networks for additional service providers. Monitoring the health and performance of network slices is important for rebalancing virtual network component load, maintaining components of the virtual network, and changing a configuration of the virtual network within the 5G network to improve the health and performance of the virtual network.

Implementations and embodiments discussed herein solve the technical problem of identifying network-slice specific events within data packets transmitted within a 5G network. The implementations and embodiments discussed herein provide for extracting network slice identifiers from packets included in PDU sessions, generating mappings between the network slice identifiers and PDU session identifiers, generating metrics based on characteristics of the PDU sessions, and generating a data set using the metrics, the data set including the network slice identifiers associated with the generated metrics. In this way, network slice-specific metrics can be generated despite many messages corresponding to the network slice not including the network slice identifier. By mapping the PDU sessions to the network slices, the health and performance of the network slice can be discovered from data packets transmitted on the 5G network. The data set can include metrics on the health and performance of the network slice at various different levels by aggregating metrics corresponding to various different points on the 5G network. The health and performance of the network slice can be used to reconfigure the network slice, such as adding additional resources to address failures on the network slice, providing the technical advantage of dynamically reallocating resources to network slices in response to the health and performance of the network slices.

Implementations and embodiments discussed herein can also address the technical problem of identifying network slice-specific registration events within a 5G network. Monitoring registration activity of network slices can aid in determining how many devices are registered to use each network slice, where the devices are located, and when they register to use the network slices. Metrics of network slice registration events can be generated by intercepting network slice registration messages exchanged between an AFM of the 5G network and UEs (e.g., mobile devices). Analysis of the network slice registration messages can determine whether UEs are successfully registered to the network slices, whether the UEs are rejected, and why the UEs are rejected. A data set can be generated to aggregate network slice registration metrics across various portions of the 5G network to show registration activity on the network slices across the 5G network and at different levels of granularity. The data set can be used to generate new configurations for the 5G network, such as allowing use of network slices in new regions based on the registration activity on the network slices.

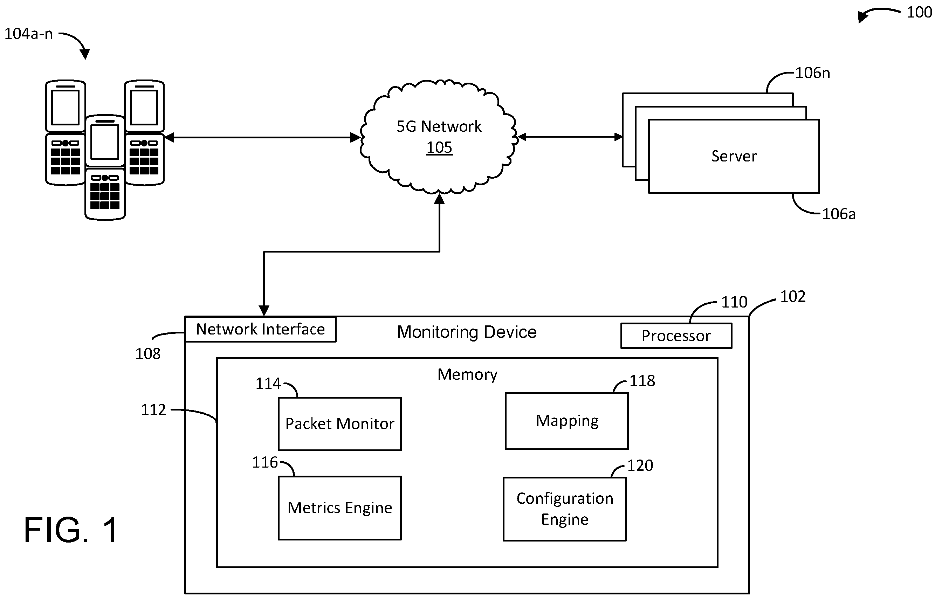

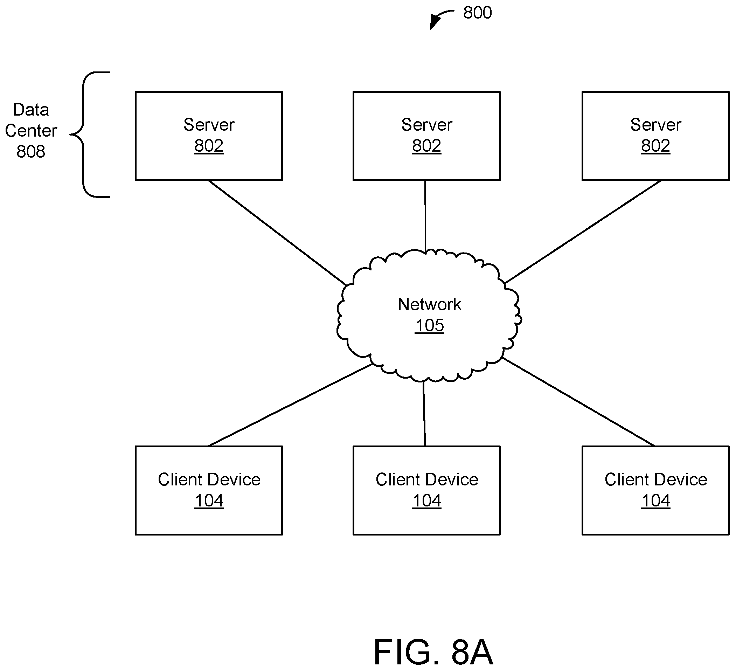

FIG. 1 illustrates an example system 100, in accordance with some embodiments. In brief overview, the system 100 can include a monitoring device 102 that measures network traffic among client devices 104a-n (hereinafter client device 104 or client devices 104) and between the client devices 104 and servers 106a-n (hereinafter server 106 or servers 106). Client devices 104 can communicate with each other and with the servers 106 via the 5G network 105. The servers 106 can each include a set of one or more servers 802, depicted in FIG. 8A, or a data center 808. The monitoring device 102 can measure the network traffic, or data packets transmitted among the client devices 104 and between the client devices 104 and the servers 106 by intercepting data packets transmitted by components of the network. The monitoring device 102 can be located at a location of the 5G network 105 to collect data packets at the location, while other monitoring devices are located in different locations of the 5G network 105 to collect data packets at their respective locations. In this way, the monitoring devices, including the monitoring device 102, can collect data at multiple different locations on the 5G network 105 to evaluate a health of the 5G network 105. In an example, the monitoring device 102 is located at an access and mobility management function (AMF) of the 5G network 105. In an example, the monitoring device 102 is located at an N1 or N2 interface of an AMF of the 5G network 105.

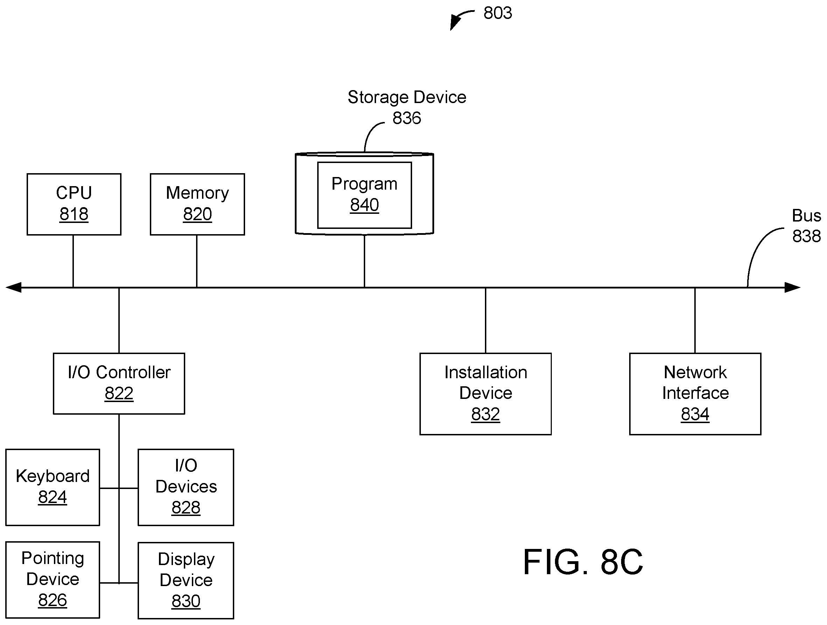

The monitoring device 102, the client devices 104, and the servers 106, can include or execute on one or more processors or computing devices (e.g., the computing device 803 depicted in FIG. 8C) and/or communicate via the 5G network 105. The 5G network 105 can include a radio access network (RAN) including cellular base stations (e.g., nodes, gNodeBs), and distributed units (DUs). A gNodeB can include a central unit (CU) and a DU. The CU can perform control plane functions (e.g., authentication and mobility management) while the DU performs user plane functions (e.g., data processing and transmission). The 5G network 105 can include the RAN and the core network, where the CU and DU are part of the core network. The 5G network 105 can include network slices that are virtual networks based on the underlying hardware of the 5G network. Each network slice is a logical network that provides specific network capabilities and network characteristics. The network slices can have different roles and functions, such as dedicated network slices for IoT devices, gaming applications, voice calls, and virtual networks, such as a network operated by a company other than the company that operates the full 5G network 105. Network slicing extends over the RAN and the core network, and through the control plane and the user plane.

The 5G network 105 can be used to access information resources such as web pages, websites, domain names, or uniform resource locators that can be presented, output, rendered, or displayed on at least one computing device (e.g., client device 104), such as a laptop, desktop, tablet, personal digital assistant, smartphone, portable computers, or speaker. For example, via the 5G network 105, the client devices 104 can query the servers 106 with domain names or otherwise communicate with the servers 106. For example, via the 5G network 105, the client devices 104 can execute phone calls among themselves, transmit data among themselves, and transmit messages among themselves. In some embodiments, the 5G network 105 may be or include a self-organizing network that implements a machine learning model to automatically adjust connections and configurations of network elements of the 5G network 105 to optimize network connections (e.g., minimize latency, reduce dropped calls, increase data rate, increase quality of service, etc.).

Each of the monitoring device 102, the client devices 104, and the servers 106 can include or utilize at least one processing unit or other logic device such as programmable logic array engine, or module configured to communicate with one another or other resources or databases. The components of the monitoring device 102, the client devices 104, and/or the servers 106 can be separate components or a single component. The system 100 and its components can include hardware elements, such as one or more processors, logic devices, or circuits.

The monitoring device 102 may include one or more processors that are configured to monitor network traffic on the 5G network 105. The monitoring device 102 may include a network interface 108, a processor 110, and/or memory 112. The monitoring device 102 may communicate with any of the client devices 104 and/or the servers 106 via the network interface 108 and/or intercept packets transmitted over the 5G network 105. The processor 110 may be or include an ASIC, one or more FPGAs, a DSP, circuits containing one or more processing components, circuitry for supporting a microprocessor, a group of processing components, or other suitable electronic processing components. In some embodiments, the processor 110 may execute computer code or modules (e.g., executable code, object code, source code, script code, machine code, etc.) stored in the memory 112 to facilitate the operations described herein. The memory 112 may be any volatile or non-volatile computer-readable storage medium capable of storing data or computer code.

The monitoring device 102 may generate metrics based on data packets exchanged over the 5G network 105 (i.e., data packets intercepted by the network interface 108). The monitoring device 102 generates network slice-specific metrics for monitoring a health of the network slices and the 5G network 105. The monitoring device 102 can generate a data set, such as an adaptive session intelligence (ASI) data set, based on the generated metrics, and/or based on metrics generated by other monitoring devices across the 5G network 105.

The memory 112 includes a packet monitor 114, a metrics engine 116, a mapping 118, and a configuration engine 120. The packet monitor 114 intercepts data packets transmitted over the 5G network 105. The packet monitor 114 intercepts data packets at the location in the 5G network 105 of the monitoring device 102. In an example, the packet monitor 114 intercepts data packets at an AMF of the 5G network 105. In an example, the packet monitor 114 intercepts data packets at an N1 or N2 interface of an AMF of the 5G network 105. The packet monitor 114 parses the intercepted data packets to extract information from the intercepted data packets. The packet monitor 114 can extract a packet data unit (PDU) session identifier from the extracted information. The packet monitor 114 can extract a network slice identifier, such as a single network slice selection assistance information (S-NSSAI). Each PDU identifier of a PDU can be associated with a network slice instance and one corresponding network slice identifier.

A network slice identifier generally comprises an S-NSSAI. An S-NSSAI includes a slice/service type (SST) that is an 8-bit value and an optional slice differentiator (SD) that is a 24-bit value to differentiate between different instances of the same slice type. The S-NSSAI is encoded using the same format on both N1 and N4 interfaces with either one byte or four bytes, with the first byte containing the SST and the other three bytes (if present) containing the SD. On the N11 interface, when the S-NSSAI is transmitted as a separate information element, the SST part is encoded as an unsigned integer with 1-3 decimal digits (value in 0-255 range), and the optional SD part is encoded by six hexadecimal characters. When the S-NSSAI is part of an N1 message carried in a binary container in an N11 message, it follows the same format as on the N1 interface.

The SST portion of the S-NSSAI may have standardized and non-standardized values, where values 0-127 belong to the standardized SST range, while values 128-255 belong to the operator-specific range. The SD portion of the S-NSSAI (if present) contains values that are operator-specific, with a standardize null value. In some implementations, the SD portion is not included to indicate that no SD value is associated with the SST.

The client devices 104 include S-NSSAIs in uplink non-access stratum (UL NAS) transport messages carrying PDU session establishment requests to the AMF of the 5G network 105. If the session establishment messages are accepted, the AMF transmits PDU session establishment accept messages back to the client devices 104. The PDU session establishment accept messages include the S-NSSAIs associated with the accepted sessions. The packet monitor 114 extracts the S-NSSAI values from the UL NAS transport messages carrying the PDU session establishment requests from the client devices 104 to the AMF and extracts the S-NSSAI values from the PDU session establishment accept messages from the AMF to the client devices 104. The extracted S-NSSAI values can be used to track slicing information for messages such as PDU session establishment messages from the client devices 104 to the 5G network 105, PDU session authentication and authorization messages from the 5G network 105 to the client devices 104, PDU session modification messages from the client devices 104 to the 5G network 105, PDU session modification messages from the 5G network 105 to the client devices 104, PDU session release messages from the client devices 104 to the 5G network 105, and PDU session release messages from the 5G network 105 to the client devices 104.

While some messages, such as the PDU session establishment requests and the PDU session establishment accept messages include the S-NSSAIs, not all messages within a PDU session include the S-NSSAI. The packet monitor 114 generates the mapping 118 to map PDU sessions to S-NSSAIs in order to track which PDU sessions are associated with which S-NSSAIs and thus which messages within the PDU sessions are associated with which S-NSSAIs.

The network monitor 114 updates the mapping 118 between PDU sessions and the S-NSSAIs based on next-generation application protocol (NGAP) messages and 5GMM uplink non-access stratum (NAS) transport messages. Examples of these messages, their information elements (IEs), whether the messages include the PDU session ID, whether the messages include the S-NSSAI, and the resulting operation on the mapping 118 are shown in Table 1.

**Table 1**

| **Message** | **IE** | **PDU Session ID** | **SNSSAI** | **Operation** |
|---|---|---|---|---|
| NGAP - PDU SESSION RESOURCE SETUP REQUEST | PDU Session Resource Setup Request List | Yes | Yes | Add each PDU Session ID & SNSSAI association |
| NGAP - PDU SESSION RESOURCE SETUP RESPONSE | PDU Session Resource Failed to Setup List -Optional - Failure | Yes | No | Mark the PDU Session ID & SNSSAI association as inactive |
| NGAP - PDU SESSION RESOURCE RELEASE RESPONSE | PDU Session Resource Released List | Yes | No | Remove the PDU Session ID & SNSSAI Association |
| NGAP - PDU SESSION RESOURCE MODIFY REQUEST( should we wait till the response is seen before updating the new S-NSSAI?) | PDU SESSION RESOURCE MODIFY REQUEST->PDU Session Resource Modify Request List | Yes | Optional | If S-NSSAI is available, then update/add the PDU Session ID & SNSSAI Association |
| NGAP - INITIAL CONTEXT SETUP REQUEST | PDU Session Resource Setup Request List | Yes | Yes | Add each PDU Session ID & SNSSAI Association |
| NGAP - INITIAL CONTEXT SETUP RESPONSE | PDU Session Resource Failed to Setup List | Yes | No | Mark the PDU Session ID & SNSSAI association as inactive |
| NGAP - INITIAL CONTEXT SETUP FAILURE | PDU Session Resource Failed to Setup List | Yes | No | Mark the PDU Session ID & SNSSAI association as inactive |
| NGAP - HANDOVER REQUEST | PDU Session Resource Setup List | Yes | Yes | Add each PDU Session ID & SNSSAI Association |
| NGAP - HANDOVER REQUEST ACKNOWLEDGE | PDU Session Resource Failed to Setup List -Optional | Yes | No | Mark the PDU Session ID & SNSSAI association as inactive |
| NGAP - HANDOVER FAILURE | HANDOVER REQUEST->PDU Session Resource Setup List | - | - | Mark the PDU Session ID & SNSSAI association as inactive |
| NGAP - PATH SWITCH REQUEST | PDU Session Resource Failed to Setup List | Yes | No | Mark the PDU Session ID & SNSSAI association as inactive |
| NGAP - PATH SWITCH REQUEST ACKNOWLEDGE | PDU Session Resource Released List -Optional | Yes | No | Mark the PDU Session ID & SNSSAI association as inactive |
| NGAP - PATH SWITCH REQUEST FAILURE | PDU Session Resource Released List -Mandatory | Yes | No | Mark the PDU Session ID & SNSSAI association as inactive |
| 5GSM - PDU SESSION ESTABLISHMENT REJECT | PDU session ID | Yes | No | Remove the PDU Session ID & SNSSAI Association |
| 5GMM - UL NAS TRANSPORT message - a single 5GSM message | PDU session ID, S-NSSAI(optional) | Yes | Optional | Add the PDU Session ID & SNSSAI association |
| 5GMM - DL NAS TRANSPORT message with failure cause value | PDU session ID, S-NSSAI(optional) | Yes | No | S-NSSAI information obtained using the PDU session ID present in the payload container that carries the message that failed |

The mapping 118 allows for tracking slice usage across PDU sessions, as the mapping 118 includes PDU session identifiers correlated with slice identifiers corresponding to S-NSSAIs. In this way, messages within a PDU session that do not include the S-NSSAI can be associated with the S-NSSAI or slice identifier by querying the mapping 118 using the PDU session identifier.

In some implementations, the network monitor 114 extracts S-NSSAIs from PDU session creation messages on the N11 interface of the AMF. In some implementations, the mapping 118 includes a mapping between N11 sessions and the S-NSSAIs. In some implementations, the network monitor 114 extracts S-NSSAIs from packet forwarding control protocol (PFCP) session establishment requests at the N4 interface of the session management function (SMF). In some implementations, the mapping 118 includes a mapping between N4 sessions and the S-NSSAIs.

In some implementations, the metrics engine 116 is part of the packet monitor 114. In some implementations, the packet monitor 114 is part of the metrics engine 116. In some implementations, the metrics engine 116 extracts the S-NSSAIs and generates the mapping 118.

The metrics engine 116 determines one or more characteristics of the PDU session based on messages exchanged within the PDU session. The characteristics of the PDU session can include events as well as usage data. In some implementations, events are indicated by event codes indicating types of events, such as types of failures. Examples of usage data include number of calls, number of sessions, speed, and latency. In an example, packets are correlated with network slice identifiers to monitor slice-specific data traffic, or slice-specific usage data. Examples of events include PDU session failures, Quality of Service (QoS) Flow failures, and dropped calls. The events can include cause values indicating a cause of the events, such as failure cause values. Examples of events with failure cause values include handover failure due to PDU session failure, handover failure due to QoS flow failure, path switch failure due to PDU session failure, PDU session resource setup failure due to PDU session setup failure, PDU session resource setup failure due to QoS setup failure, PDU session resource modification failure due to PDU session failure, PDU session resource modification failure due to QoS flow failure, initial context setup failure due to PDU session failure, UE context resume failure due to PDU session failure, UE context resume failure due to QoS flow failure, UE context resume failure due to PDU session resource resumption failure, and UE context resume failure due to QoS flow resource resumption failure. Examples of other events include a PDU session modify request and a PDU session resource release.

The metrics engine 116 can correlate characteristics of PDU sessions (i.e., data plane packets) with network slice information (i.e., network slice identifiers, control plane slice information) to monitor data traffic on a per-slice basis. In an example, the network slice information at the control plane includes packet forwarding control protocol (PFCP) information from the N4 interface of the AMF such as S-NSSAIs, as discussed herein. In this example, the data plane information includes general packet radio service (GPRS) Tunneling protocol user plane (GTP-U) information such as traffic across GTP-U data tunnels from the N3 interface of the AMF. In this example, the PFCP information (control plane information) from the N4 interface is correlated with the GTP-U information (data plane information) from the N3 interface using GTP tunnel endpoint identifiers (TEIDs) of the GTP-U information and IP addresses of the PFCP information. In some implementations, the mapping 118 of the network slice identifier to the PDU session identifier is generated using the correlation between the GTP TEIDs and IP addresses.

The metrics engine 116 generates a set of metrics based on the characteristics of the PDU session and a network slice identifier using the mapping 118. The set of metrics can provide a view of events on the network slice at the location of the monitoring device 102. The metrics engine 116 can generate sets of metrics for each network slice identified in the messages on the 5G network 105. By using the mapping 118, the metrics engine 116 can accurately be associated PDU session characteristics with network slices. In this way, the metrics engine 116 can generate slice-specific network performance metrics.

The metrics engine 116 can generate a data set (e.g., an adaptive session intelligence (ASI) data set) based on the set of metrics, where the data set includes network slice identifiers associated with the set of metrics. In some implementations, the metrics engine 116 generates the data set based on sets of metrics collected at various points in the 5G network 105. In an example, the metrics engine 116 can generate the data set based on slice-specific metrics generated by monitoring devices at various locations in the 5G network 105. In this way, the metrics engine 116 can generate the data set to include slice-specific metrics representing an overall health or performance of the network slices across the 5G network 105. In an example, the metrics engine 116 generates the data set to show failed connections for IoT devices on a network slice dedicated to IoT device communications. In this example, the data set can identify weak points or bottlenecks in the network slice, such as regions or components where connection failures exceed failure thresholds. In an example, the metrics engine 116 generates the data set to show latency in a network slice dedicated to gaming applications to identify where latency rises above a level defined in a subscriber agreement.

In some implementations, the data set includes data correlating control plane information and data plane information for analyzing network slices. The data set may include information regarding GTP-U data tunnels that are mapped to PDU session identifiers. The information regarding GTP-U data tunnels may include traffic across the GTP-U data tunnels. The traffic across the GTP-U data tunnels may indicate usage of the corresponding network slices. As discussed above, the information regarding the GTP-U data tunnels (e.g., traffic) can be associated with PDU sessions mapped to network slices by correlating the information regarding the GTP-U data tunnels with PFCP information. In some implementations, the information regarding the GTP-U data tunnels is aggregated based on network slice identifiers. In an example, traffic across all GTP-U data tunnels associated with a network slice is aggregated to determine traffic on the network slice. In some implementations, the information regarding the GTP-U data tunnels is included in the one or more metrics included in the set of metrics.

In some implementations, generating the data set includes contributing, by the metrics engine 116, the set of metrics generated by the metrics engine 116 to the data set. In this way, the metrics engine 116 contributes its view of the health of the 5G network 105 and its network slices to the overall data set. In an example, the data set includes indications of metrics according to location on the 5G network 105 and aggregate metrics based on all of the metrics for the entire 5G network 105, where the metrics engine 116 contributes its location-specific metrics for each network slice, causing the aggregate metrics to be updated to reflect the metrics generated by the metrics engine 116. In an example, the data set aggregates PDU session failures and causes across the 5G network 105 to indicate where computing resources allocated to a network slice are insufficient (causing PDU session failures), where radio resources allocated to the network slice are insufficient (causing PDU session failures), and where the network slice is operating as intended, with PDU session failures below a predetermined acceptable level.

In some implementations, the set of metrics generated by the metrics engine 116 and/or the data set include application identifiers indicating an application associated with the PDU characteristics. In this way, a health of the application can be tracked using the set of metrics and/or the data set, allowing for monitoring network performance for specific applications operating on the network slices.

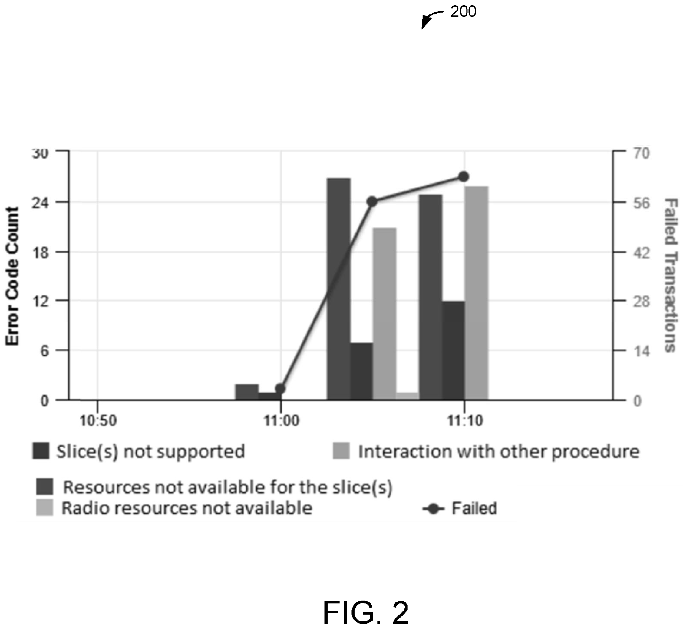

The data set can be used to generate visual indications of slice-specific network health for the 5G network 105, or network slice health for all network slices of the 5G network 105. The visual indications can include a number of failure events along with failure cause values for the failure events, as illustrated in FIG. 2.

In some implementations, the memory 112 includes a configuration engine 120. The configuration engine 120 can generate a new configuration for the 5G network 105. The configuration engine 120 can generate a new configuration for a network slice of the 5G network 105 based on a health of the network slice being below a predetermined threshold. The new configuration can include additional resources corresponding to causes of the health of the network slice being below the predetermined threshold. In an example, the configuration engine 120 generates a new configuration for a network slice of the 5G network 105 in response to a percentage of successful PDU sessions falling below a predetermined PDU session failure threshold. In this example, the new configuration includes additional radio resources for the network slice based on PDU session failures on the network slice being caused by a lack of radio resources for the network slice. The new configuration can be provided to the 5G network 105 for implementation. If the new configuration is implemented, new metrics generated by the monitor device 102 will reflect the new configuration, allowing for comparison of network slice performance under different configurations of the 5G network 105.

FIG. 2 is an illustration of an example user interface 200 or report indicating causes for connection failures within a network slice of a 5G wireless network. The user interface 200 includes a line indicating a number of failed transactions, corresponding to the scale on the righthand axis. The user interface 200 includes bars indicating causes for the failed transactions, corresponding to the scale on the left-hand axis. The causes for the failed transactions include the requested slices not being supported, resources not being available for the requested slices, radio resources not being available, and interaction other procedure.

The user interface 200 can provide a high-level view of the health of a network slice of a 5G network, showing when failures occur, why they occur, and any trends in failures. The user interface 200 can also display visual representations of metrics, such as failures, at different levels of granularity within the 5G network. In an example, the user interface 200 can show a high-level view of a health of the overall 5G network. In an example, the user interface 200 can show a granular view of failures on a specific network slice at a specific point in the 5G network corresponding to metrics generated by a single monitoring device.

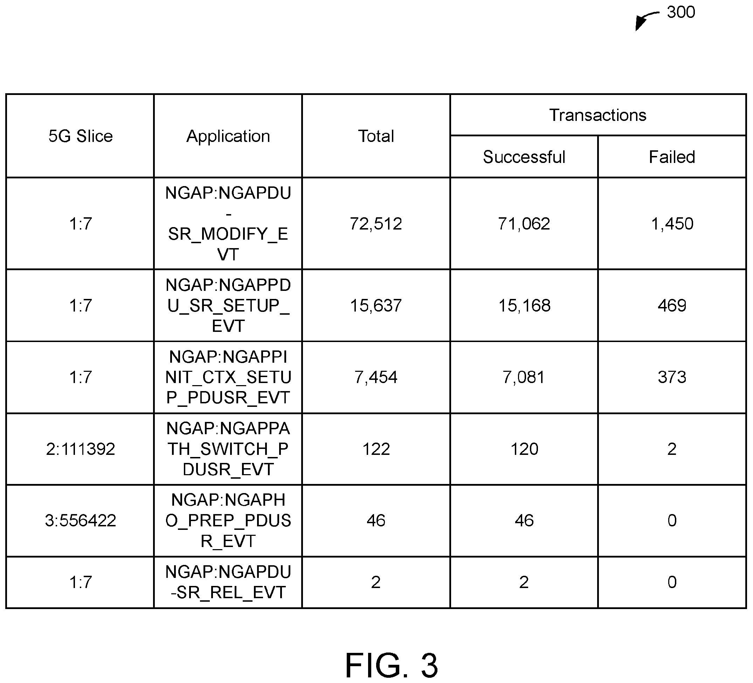

FIG. 3 is an illustration of an example report 300 generated using a data set containing slice-specific metrics. The report 300 includes network slice identifiers, application identifiers, total transactions for the applications on the network slices, and counts for successful and failed transactions. The application identifiers identify events or transactions, such as PDU session modification or resource setup, while the counts for successful and failed transactions indicate how many of the total number of events or transactions were successful or unsuccessful.

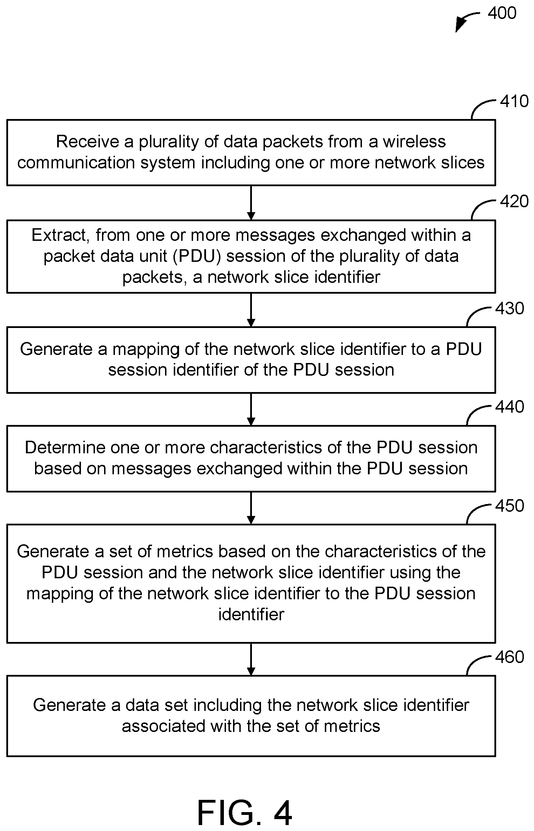

FIG. 4 is a flow diagram illustrating operations of an example method 400 for generating a data set including slice-specific metrics. The method 400 may include more, fewer, or different operations than shown. One or more operations may be performed in the order shown, in another order, and/or concurrently. The method 400 may be performed by the monitor device 102 of FIG. 1.

At operation 410, a monitor device receives a plurality of data packets from a wireless communication system including one or more network slices. The monitor device can intercept the data packets as they are transmitted within the wireless communication system between sender and receiver. In an example, a mobile phone transmits data packets to another mobile phone or to a server via the wireless communication system, and the monitor device intercepts the data packets such that the communication between the mobile phone and the other mobile phone or server is uninterrupted. In an example, the monitor device intercepts the plurality of data packets at an N1 or an N2 interface of an AMF of a 5G network. At operation 420, the monitor device extracts, from one or more messages within a packet data unit (PDU) session of the plurality of data packets, a network slice identifier. In some implementations, the network slice identifier is an S-NSSAI. In some implementations, the network slice identifier is derived from the S-NSSAI which is extracted from the one or more messages.

At operation 430, the monitor device generates a mapping of the network slice identifier to a PDU session identifier of the PDU session. In some implementations, generating the mapping of the network slice identifier to the PDU session identifier includes adding the network slice identifier and the PDU session identifier to a table that maps network slice identifiers to PDU sessions. In some implementations, generating the mapping of the network slice identifier to the PDU session identifier includes adding the network slice identifier and the PDU session identifier to a key-value database that 124395-2maps network slice identifiers to PDU sessions.

At operation 440, the monitor device determines one or more characteristics of the PDU session based on messages exchanged within the PDU session. The characteristics of the PDU session can include events as well as usage data, including number of calls, number of sessions, speed, latency, causes for latency, PDU session failures, Quality of Service (QoS) Flow failures, dropped calls, causes of dropped calls, handover failure due to PDU session failure, handover failure due to QoS flow failure, path switch failure due to PDU session failure, PDU session resource setup failure due to PDU session setup failure, PDU session resource setup failure due to QoS setup failure, PDU session resource modification failure due to PDU session failure, PDU session resource modification failure due to QoS flow failure, initial context setup failure due to PDU session failure, UE context resume failure due to PDU session failure, UE context resume failure due to QoS flow failure, UE context resume failure due to PDU session resource resumption failure, UE context resume failure due to QoS flow resource resumption failure, a PDU session modify request, and a PDU session resource release.

At operation 450, the monitor device generates a set of metrics based on the characteristics of the PDU session and the network slice identifier using the mapping of the network slice identifier to the PDU session identifier. In this way, the monitor device correlates characteristics of PDU sessions (i.e., data plane packets) with network slice information (i.e., network slice identifiers, control plane slice information) to monitor data traffic on a per-slice basis. In an example, the network slice information at the control plane includes packet forwarding control protocol (PFCP) information from the N4 interface of the AMF such as S-NSSAIs, as discussed herein. In this example, the data plane information includes general packet radio service (GPRS) Tunneling protocol user plane (GTP-U) information from the N3 interface of the AMF. In this example, the PFCP information (control plane information) from the N4 interface is correlated with the GTP-U information (data plane information) from the N3 interface using GTP tunnel endpoint identifiers (TEIDs) of the GTP-U information and IP addresses of the PFCP information. In some implementations, the mapping of the network slice identifier to the PDU session identifier is generated using the correlation between the GTP TEIDs and IP addresses. The set of metrics indicate events and/or usage data for the PDU session, which are associated with the network slice using the mapping. In this way, the metrics reflect usage data and/or events on the network slice, allowing for monitoring of usage data and/or events on the network slice. The set of metrics can include a total number of transactions or events, along with counts or percentages of success and failures.

At operation 460, the monitor device generates a data set including the network slice identifier associated with the set of metrics. The data set can include multiple sets of metrics associated with network slices as well as sets of metrics not associated with any network slice. The data set can aggregate multiple sets of metrics each associated with a same network slice in aggregate metrics for the overall network slice within the wireless communication system. In an example, the data set includes metrics for a network slice in a 5G network based on aggregating metrics for the network slice collected at multiple different locations in the 5G network.

In some implementations, the data set includes the network slice identifier associated with general packet radio service (GPRS) tunneling protocol user plane (GTP-U) data tunnels mapped to the PDU session identifier. In some implementations, the method 400 includes mapping the GTP-U data tunnels to the PDU session by correlating the packet forwarding control protocol information from an N4 interface with GTP-U information from an N3 interface.

In some implementations, the method 400 includes generating the multiple sets of metrics based on the network slice identifier using data packets intercepted at different points of the wireless communication network where generating the data set includes aggregating the plurality of sets of metrics. The method 400 can include determining, based on the data set including metrics generated by aggregating the multiple sets of metrics, a health of the network slice corresponding to the network slice identifier. In this way, the data set can provide a view of the network slice at various levels of granularity from a high-level view of the network slice across the wireless communication network to a granular view of events and usage at a particular point in the wireless communication network corresponding to a monitor device.

In some implementations, the plurality of metrics are generated by network monitors located at different locations in the 5G network. In some implementations, the method 400 includes generating a first subset of the plurality of sets of metrics based on a first subset of the plurality of data packets received by a first network monitor in a first location in the wireless communication network corresponding to a first geographic area and generating a second subset of the plurality of sets of metrics based on a second subset of the plurality of data packets received by a second network monitor in a second location in the wireless communication network corresponding to a second geographic area. In an example, the first network monitor collects data packets at a first cell tower (e.g., gNodeB) of a 5G network and the second network monitor collects data packets at a second cell tower of the 5G network such that the data set includes a view of the health of the network slice in a first cell corresponding to the first cell tower and in a second cell corresponding to the second cell tower and a view of the health of the network slice across the first and second cells of the 5G network.

In some implementations, in response to the health of the network slice being below a predetermined threshold, the method 400 includes generating a modified network configuration including a reallocation of network resources to the network slice. The reallocation can correspond to causes of the network health being below the predetermined threshold. In an example, in response to the health of the network slice being below a threshold of 90% successful PDU sessions due to a lack of radio resources on the network slice, the modified network configuration includes a reallocation of greater radio resources to the network slice.

In some implementations, the method 400 includes determining that a mobile device is registered for the network slice by monitoring a network slice registration message exchanged between the mobile device and an access and mobility management function (AMF), wherein the registration message includes the network slice identifier of the network slice. The data set can include registration metrics for the network slice as well as usage and event metrics for the network slice to show where failures occur and whether registration failures in portions of the wireless communication network are correlated with failure events in those portions of the wireless communication network.

The method 400 can include updating, by the network monitor, the set of metrics and/or the data set based on new events and/or usage data. In some implementations, the method 400 includes generating, by the network monitor, an updated set of metrics including the network slice identifier associated with one or more additional metrics corresponding to characteristics of an additional PDU session, updating, based on the updated set of metrics, the data set, and determining, based on the updated data set, a health trend of a network slice corresponding to the network slice identifier. In this way, the network monitor can provide real-time metrics for the network slice and all network slices of the wireless communication network. Additionally, the network monitor can identify a health trend of the network slice at the location of the network monitor (corresponding to data packets intercepted by the network monitor) and/or for the entire wireless communication network.

Referring again to FIG. 1, the monitoring device 102 may generate registration metrics for the network slices based on data packets exchanged over the 5G network 105 (i.e., data packets intercepted by the network interface 108) that include network slice registration messages. The monitoring device 102 generates network slice-specific registration metrics for monitoring a health of the network slices and the 5G network 105. The monitoring device 102 can generate a data set, such as an adaptive session intelligence (ASI) data set, based on the generated metrics, and/or based on metrics generated by other monitoring devices across the 5G network 105.

The packet monitor 114 parses the data packets intercepted by the network interface 108 to extract information from the intercepted data packets. The packet monitor 114 can identify registration messages for registering the client devices 104 with network slices of the 5G network 105. The registration messages can be exchanged between the client devices 104 and the 5G network 105 (e.g., the AMF of the 5G network 105) to allow the client devices 104 to use the network slices of the 5G network 105. The packet monitor 114 can extract a network slice identifier, such as a single network slice selection assistance information (S-NSSAI) or other network slice identifier derived from the S-NSSAI, from the registration messages. The registration messages can include registration requests from the client devices 104 to the 5G network, registration request responses from the 5G network 105 to the client devices 104 including acceptances and/or rejections, configuration update commands from the 5G network 105 to the client devices 104, and deregistration requests from the 5G network 105 to the client devices 104.

The registration requests include requested S-NSSAIs. A client device of the client devices 104 sends a registration request including one or more requested S-NSSAIs to allow the client device to use the requested S-NSSAIs on the 5G network 105. The requested S-NSSAIs can include S-NSSAIs and mapped S-NSSAIs. A mapped S-NSSAI can be an S-NSSAI for a home public land mobile network (HPLMN) that is mapped to an S-NSSAI of a visited public land mobile network (VPLMN).

The registration request messages can include registration initiation messages and registration mobility messages. The registration initiation messages correspond to requests to register a client device to use the network slice, while the registration mobility messages correspond to requests to use the network slice for which the client device is already registered in a new location, such as a VPLMN.

In response to the registration requests, a network slice specific authentication and authorization (NSSAA) procedure is performed. The NSSAA procedure authenticates and authorizes the client device for each of the requested S-NSSAIs. In some implementations, the AMF determines whether the NSSAA procedure is required for an S-NSSAI and initiates the NSSAA procedure for each S-NSSAI that requires the NSSAA procedure. The NSSAA procedure can include sending an authentication challenge from the AMF to the client device, receiving an authentication challenge response from the mobile device, and comparing, by the AMF, the authentication challenge response to an expected value to see if they match.

In response to the registration requests, the 5G network 105 (e.g., the AMF) transmits registration request responses to the client devices 104. A registration request response includes an indication for each S-NSSAI in the registration request that indicates whether the S-NSSAI is allowed, rejected, configured, or pending. An allowed S-NSSAI is one that the client device can use for communication on the 5G network 105. A rejected S-NSSAI is one that the client device cannot use for communication on the 5G network 105. A configured S-NSSAI is one that the client device is allowed to use for communication on the 5G network 105 and one that is already provisioned on the client device (e.g., credentials for the S-NSSAI are stored on the client device). A pending S-NSSAI is one that the client device is not yet approved to use based on the NSSAA procedure. Once the NSSAA procedure completes, the pending S-NSSAI is either approved or rejected.

The 5G network 105 transmits configuration update commands to the client device for each S-NSSAI that is allowed. The configuration update commands can include credentials for the S-NSSAIs for the client device to use in accessing the S-NSSAIs to communicate on the 5G network. The configuration command indicates that the client device is able to use the corresponding S-NSSAIs to communicate on the 5G network, indicating successful registration on the corresponding network slices.

In response to an S-NSSAI being rejected, the 5G network 105 (e.g., the AMF) can send a deregistration request to the client device with the rejected S-NSSAI. In an example, the AMF sends a deregistration request to a client device with an S-NSSAI for which the client device failed the NSSAA process. The AMF can send a rejection cause for each S-NSSAI for which registration is rejected. The rejection causes can be indicated in rejection cause codes included in the registration request response and/or the deregistration request. The rejection causes can include the S-NSSAI not being available in the current PLMN or standalone non-public network (SNPN), the S-NSSAI not being available in the current registration area, and the S-NSSAI not being available due to a failed or revoked NSSAA procedure.

The packet monitor 114 parses the data packets including the registration messages to identify the registration messages and determine registration events within the registration messages. In some implementations, the metrics engine 116 determines the registration events within the registration messages. The metrics engine 116 generates registration metrics based on the registration events. The registration metrics can include registration initiation events, registration mobility events, configuration update events, and deregistration events. The configuration update event can be used to determine which network slices the client devices 104 can use. A registration initiation event indicates that a client device requested registration on a network slice, and a configuration update event corresponding to the registration initiation event indicates that the registration was successful and that the AMF sent the configuration update command to the client device to allow the client device to use the network slice. By capturing registration initiation events, registration mobility events, configuration update events, and deregistration events, the metrics engine 116 can generate metrics that indicate how many registration attempts were performed, how many of those registration attempts were successful, and how many current registrations exist.

The registration metrics generated by the metrics engine 116 can include the S-NSSAIs to indicate for which network slices registration was requested, accepted, and rejected. The registration metrics can include failure/rejection cause codes for each registration rejection, indicating a cause for the failure/rejection of the registration. In this way, the metrics engine 116 can generate network slice-specific registration metrics to indicate a health and performance of the network slices.

The metrics engine 116 can generate a data set (e.g., an adaptive session intelligence (ASI) data set) based on the registration metrics, where the data set includes network slice identifiers associated with the registration metrics. In some implementations, the metrics engine 116 generates the data set based on registration metrics collected at various points in the 5G network 105. In an example, the metrics engine 116 can generate the data set based on slice-specific registration metrics generated by monitoring devices at various locations in the 5G network 105. In this way, the metrics engine 116 can generate the data set to include slice-specific registration metrics representing an overall health, performance and/or registration activity of the network slices across the 5G network 105.

In some implementations, generating the data set includes contributing, by the metrics engine 116, the registration metrics generated by the metrics engine 116 to the data set. In this way, the metrics engine 116 contributes its view of the network slice registration activity on the 5G network 105 and its network slices to the overall data set. In an example, the data set includes indications of registration metrics per location on the 5G network 105 and aggregate registration metrics based on all of the registration metrics for the entire 5G network 105, where the metrics engine 116 contributes its location-specific registration metrics for each network slice, causing the aggregate registration metrics to be updated to reflect the registration metrics generated by the metrics engine 116.

In some implementations, the configuration engine 120 generates a new configuration for the 5G network 105. The configuration engine 120 can generate the new configuration based on the data set. The new configuration can be generated in response to the registration activity (indicated in the data set) of network slices on the 5G network 105 indicating increased or decreased activity in different regions, increased failures in a region, and/or failures above a predetermined registration failure threshold. In an example, the new configuration allocates resources of the 5G network 105 to the network slices to reduce a number of registration failures. In an example, the new configuration makes a network slice available in a region in response to a high number of failed registration requests originating from the region.

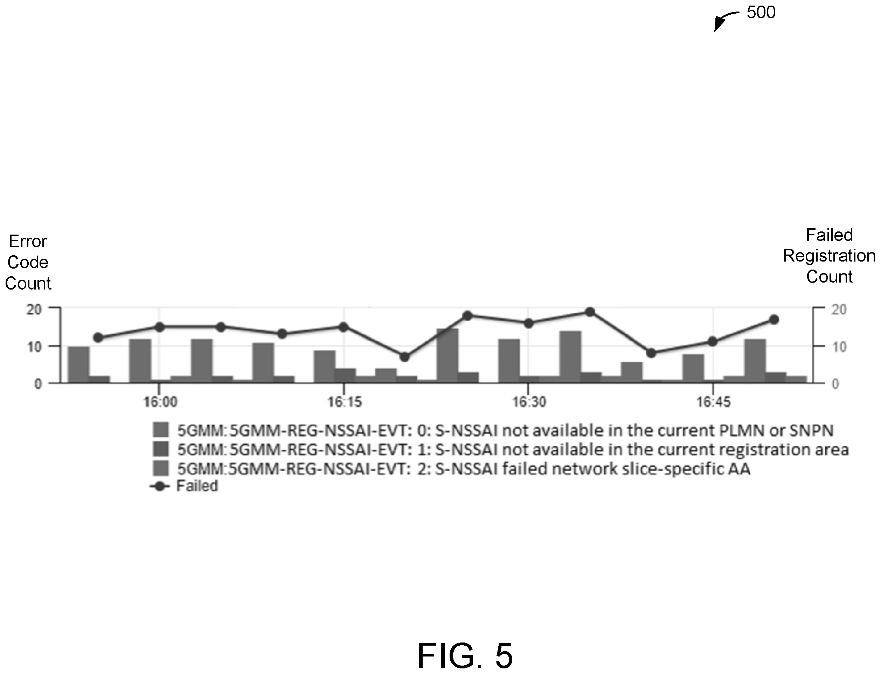

The data set can be used to generate visual indications of slice-specific registration activity or network health for the 5G network 105, or network slice registration activity or health for all network slices of the 5G network 105. The visual indications can include a number of registration failure events along with registration failure cause values for the failure events, as illustrated in FIG. 5.

FIG. 5 is an illustration of an example user interface 500 or report indicating causes for registration failures within a network slice of a 5G wireless network. The user interface 500 includes a line indicating a number of failed registrations, corresponding to the scale on the righthand axis. The user interface 500 includes bars indicating causes for the failed registrations, corresponding to the scale on the left-hand axis. The causes for the failed transactions include the requested network slice not being available in the current PLMN or SNPN, the requested network slice not being available in the current registration are, and the requested network slice registration corresponding to a failed NSSAA procedure.

The user interface 500 can provide a high-level view of the registration activity or health of a network slice of a 5G network, showing when registration failures occur, why they occur, and any trends in failures. The user interface 200 can also display visual representations of metrics, such as failures, at different levels of granularity within the 5G network. In an example, the user interface 200 can show a high-level view of a health of the overall 5G network. In an example, the user interface 200 can show a granular view of failures on a specific network slice at a specific point in the 5G network corresponding to metrics generated by a single monitoring device.

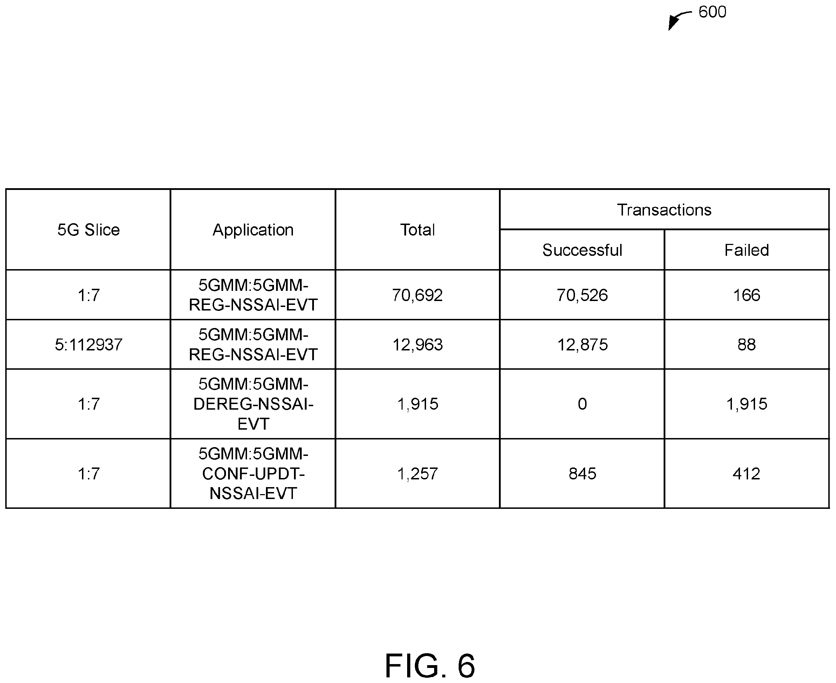

FIG. 6 is an illustration of an example report 600 generated using a data set containing slice-specific registration metrics. The report 600 includes network slice identifiers, application identifiers, total transactions (i.e., registrations) for the applications on the network slices, and counts for successful and failed transactions. The application identifiers identify events or transactions, such as registration initiation events, deregistration events, and configuration update events, while the counts for successful and failed transactions indicate how many of the total number of events or transactions were successful or unsuccessful. In the report 600, the deregistration events are all indicated as "failed," as the deregistration events correspond to failures of registration events.

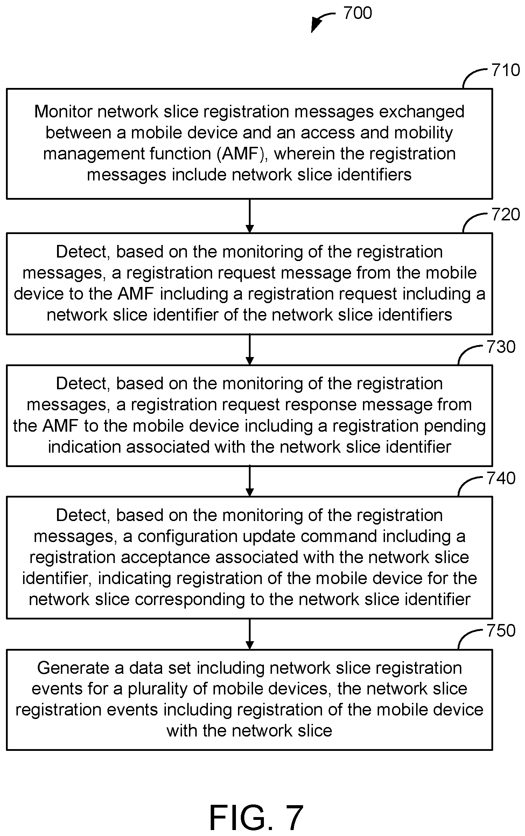

FIG. 7 is a flow diagram of an example method 700 for generating a data set including slice-specific registration metrics. The method 700 may include more, fewer, or different operations than shown. One or more operations may be performed in the order shown, in another order, and/or concurrently. The method 700 may be performed by the monitor device 102 of FIG. 1.

At operation 710, the monitor device monitors network slice registration messages exchanged between a mobile device and an access and mobility management function (AMF), where the registration messages include network slice identifiers. In some implementations, the monitor device intercepts the network slice registration messages between the mobile device and the AMF. In some implementations, the monitor device intercepts the network slice registration messages at an N1 interface or an N2 interface of the AMF.

At operation 720, the monitor device detects, based on the monitoring of the registration messages, a registration request message from the mobile device to the AMF including a registration request including a network slice identifier of the network slice identifiers. The registration request message can be a registration initiation request message to initiate use of the network slice by the mobile device or a registration mobility request message to continue use of the network slice by the mobile device in a new area or region, such as a VPLMN. By differentiating between the registration initiation requests and the registration mobility requests, the monitor device can distinguish between new users of a network slice and continuing users of a network slice.

At operation 730, the monitor device detects, based on the monitoring of the registration messages, a registration request response message from the AMF to the mobile device including a registration pending indication associated with the network slice identifier.

At operation 740, the monitor device detects, based on the monitoring of the registration messages, a configuration update command including a registration acceptance associated with the network slice identifier, indicating registration of the mobile device for the network slice corresponding to the network slice identifier.

In some implementations, the method 700 includes detecting, based on the monitoring of the registration messages, an authentication challenge from the AMF to the mobile device and an authentication challenge response from the mobile device to the AMF, and the AMF transmits the configuration update command to the mobile device in response to the authentication challenge response matching an expected value. The authentication challenge and authentication challenge response can be part of an NSSAA procedure. The AMF can transmit the configuration update command to the mobile device in response to the NSSAA procedure being successful. The AMF can transmit a deregistration request to the mobile device in response to the NSSAA procedure being unsuccessful.

At operation 750, the monitor device generates a data set including network slice registration events for a plurality of mobile devices, the network slice registration events including registration of the mobile device with the network slice. The data set can include multiple sets of registration metrics associated with the network slices of the network. The data set can aggregate multiple sets of registration metrics each associated with a same network slice in aggregate metrics for the overall network slice within the wireless communication system. In an example, the data set includes registration metrics for a network slice in a 5G network based on aggregating registration metrics for the network slice collected at multiple different locations in the 5G network.

In some implementations, the method 700 includes generating the multiple sets of registration metrics based on the network slice identifier using data packets intercepted at different points of the network, where generating the data set includes aggregating the plurality of sets of registration metrics. The method 700 can include determining, based on the data set including registration metrics generated by aggregating the multiple sets of metrics, a health or registration activity of the network slice corresponding to the network slice identifier. In this way, the data set can provide a view of the network slice at various levels of granularity from a high-level view of the network slice across the network to a granular view of events and usage at a particular point in the wireless communication network corresponding to a monitor device.

In some implementations, different sets of registration metrics are generated by network monitors located at different locations in the 5G network. In some implementations, the method 700 includes generating a first subset of a plurality of sets of registration metrics based on a first subset of the plurality of data packets received by a first network monitor in a first location in the network corresponding to a first geographic area and generating a second subset of the plurality of sets of registration metrics based on a second subset of the plurality of data packets received by a second network monitor in a second location in the network corresponding to a second geographic area. In an example, the first network monitor collects data packets at a first cell tower (e.g., gNodeB) of a 5G network and the second network monitor collects data packets at a second cell tower of the 5G network such that the data set includes a view of the health or registration activity of the network slice in a first cell corresponding to the first cell tower and in a second cell corresponding to the second cell tower and a view of the health or registration activity of the network slice across the first and second cells of the 5G network.

In some implementations, the method 700 includes generating a modified network configuration including a reallocation of network resources to the network slice. The reallocation can correspond to causes of registration failures, such as network slices being unavailable in certain regions. In an example, in response to a number of failed registration requests for a network slice in a PLMN due to the network slice not being available in the PLMN, the modified network configuration includes a reallocation of the 5G network to allow the network slice in the PLMN.

In some implementations, one or more of the registration messages include multiple network slice identifiers such that registration on multiple network slices can be processed in parallel. In an example, a mobile device requests registration for five network slices, and the AFM responds with indications of acceptance, rejection, or pending for each of the five network slices. In an example, the registration request message includes a plurality of network slice identifiers, the registration request response message includes a registration acceptance indication, a registration pending indication, or a registration rejection indication for each of the plurality of network slice identifiers, and the network slice registration events included in the data set include a registration or a deregistration for the mobile device for each of the plurality of network slices. In this way, the data set includes registration metrics for each requested network slice, whether the registration was requested in its own registration request message or in a registration request message along with multiple other network slices.

In some implementations, the monitor device generates a visual representation using the data set, the visual representation indicating slice registration activity or performance for the network slice. In some implementations, the monitor device generates the visual representation in response to a request from a client device including the network slice identifier. In an example, a virtual network provider that offers subscriptions to the network slice as a virtual network makes a request for a report or visual representation of registration activity on the network slice. In an example, a network provider that offers a network slices dedicated to IoT devices, a network device dedicated to video streaming, and a network slice dedicated to voice calls requests visual representations of the registration activity or performance on each of those three network slices.

The data set can include cause codes indicating causes for registration failures and/or deregistration events. In an example, the monitor device detects, based on the monitoring of the registration messages, a second registration request response message from the AMF to a second mobile device including a registration rejection associated with the network slice identifier and detects a deregistration request from the AMF to the second mobile device including the network slice identifier. In this example, the network slice registration events of the data set include the deregistration request to the second mobile device for the network slice and an associated deregistration cause code indicating unavailability of the network slice. In an example, the monitor device detects, based on the monitoring of the registration messages, a second registration request response message from the AMF to a second mobile device including a registration rejection associated with the network slice identifier and detects a deregistration request from the AMF to the second mobile device including the network slice identifier. In this example, the network slice registration events of the data set include the deregistration request to the second mobile device for the network slice and an associated deregistration cause code indicating that the second mobile device is not authorized to use the network slice.

Aspects of the present disclosure are directed to a computer-implemented method for generating network slice-specific metrics using intercepted data packets, the method including receiving, by one or more processors, a plurality of data packets from a wireless communication system including one or more network slices. extracting, by the one or more processors, from one or more messages exchanged within a packet data unit (PDU) session of the plurality of data packets, a network slice identifier, generating, by the one or more processors, a mapping of the network slice identifier to a PDU session identifier of the PDU session, determining, by the one or more processors, one or more characteristics of the PDU session based on messages exchanged within the PDU session, generating, by the one or more processors, a set of metrics based on the characteristics of the PDU session and the network slice identifier using the mapping of the network slice identifier to the PDU session identifier, and generating, by the one or more processors, a data set including the network slice identifier associated with the set of metrics.

In some implementations, the characteristics of the PDU session include at least one of a handover failure, a dropped call, and latency. In some implementations, the set of metrics includes a cause for the at least one of the handover failure, the dropped call, and the latency. In some implementations, the method includes generating, by the one or more processors, a plurality of sets of metrics based on the network slice identifier using data packets intercepted at different points of the wireless communication network, wherein generating the data set includes aggregating the plurality of sets of metrics, and determining, by the one or more processors, based on the data set, a health of a network slice corresponding to the network slice identifier. In some implementations, the method includes, in response to the health of the network slice being below a predetermined threshold, generating, by the one or more processors, a modified network configuration including a reallocation of network resources to the network slice. In some implementations, the method includes generating, by the one or more processors, a first subset of the plurality of sets of metrics based on a first subset of the plurality of data packets received by a first network monitor in a first location in the wireless communication network corresponding to a first geographic area, and generating, by the one or more processors, a second subset of the plurality of sets of metrics based on a second subset of the plurality of data packets received by a second network monitor in a second location in the wireless communication network corresponding to a second geographic area.

In some implementations, the method includes determining, by the one or more processors, that a mobile device is registered for the network slice by monitoring a network slice registration message exchanged between the mobile device and an access and mobility management function (AMF), wherein the registration message includes the network slice identifier of the network slice. In some implementations, the method includes generating, by the one or more processors, an updated set of metrics including the network slice identifier associated with one or more additional metrics corresponding to characteristics of an additional PDU session, updating, by the one or more processors, based on the updated set of metrics, the data set, and determining, by the one or more processors, based on the updated data set, a health trend of a network slice corresponding to the network slice identifier.

Aspects of the present disclosure are directed to a network device for tracking a status of a network slice using intercepted data packets, the network device including a network interface configured to receive a plurality of data packets from a wireless communication system including one or more network slices, and a metrics engine configured to extract, from one or more messages exchanged within a packet data unit (PDU) session of the plurality of data packets, a network slice identifier corresponding to the network slice, generate, by the one or more processors, a mapping of the network slice identifier to a PDU session identifier of the PDU session, determine one or more characteristics of the PDU session based on messages exchanged within the PDU session, generate a set of metrics based on the characteristics of the PDU session and the network slice identifier using the mapping of the network slice identifier to the PDU session identifier, and generate a data set including the network slice identifier associated with the set of metrics corresponding to the characteristics of the PDU session.

In some implementations, the characteristics of the PDU session include at least one of a handover failure, a dropped call, and latency. In some implementations, the set of metrics includes a cause for the at least one of the handover failure, the dropped call, and the latency. In some implementations, the metrics engine is configured to generate a plurality of sets of metrics based on the network slice identifier using data packets intercepted at different points of the wireless communication system, wherein generating the data set includes aggregating the plurality of sets of metrics, and determine, based on the data set, a health of a network slice corresponding to the network slice identifier. In some implementations, the metrics engine is configured to, in response to the health of the network slice being below a predetermined threshold, generate a modified network configuration including a reallocation of network resources to the network slice. In some implementations, the metrics engine is configured to generate a first subset of the plurality of sets of metrics based on a first subset of the plurality of data packets received by a first network monitor in a first location in the wireless communication network corresponding to a first geographic area, and generate a second subset of the plurality of sets of metrics based on a second subset of the plurality of data packets received by a second network monitor in a second location in the network corresponding to a second geographic area.

In some implementations, the network device is configured to determine that a mobile device is registered for the network slice by monitoring a network slice registration message exchanged between the mobile device and an access and mobility management function (AMF), wherein the registration message includes the network slice identifier of the network slice. In some implementations, the metrics engine is configured to generate an updated set of metrics including the network slice identifier associated with one or more additional metrics corresponding to characteristics of an additional PDU session, update, based on the updated set of metrics, the data set, and determine, based on the updated data set, a health trend of a network slice corresponding to the network slice identifier.

Aspects of the present disclosure are directed to a non-transitory, computer-readable medium including instructions which, when executed by one or more processors, cause the one or more processors to extract, from one or more messages exchanged within a packet data unit (PDU) session of the plurality of data packets, a network slice identifier corresponding to the network slice, generate, by the one or more processors, a mapping of the network slice identifier to a PDU session identifier of the PDU session, determine one or more characteristics of the PDU session based on messages exchanged within the PDU session, generate a set of metrics based on the characteristics of the PDU session and the network slice identifier using the mapping of the network slice identifier to the PDU session identifier, and generate a data set including the network slice identifier associated with the set of metrics.

In some implementations, the instructions cause the one or more processors to generate a plurality of sets of metrics based on the network slice identifier using data packets intercepted at different points of the wireless communication network, wherein generating the data set includes aggregating the plurality of sets of metrics, and determine, based on the data set, a health of a network slice corresponding to the network slice identifier. In some implementations, the instructions cause the one or more processors to, in response to the health of the network slice being below a predetermined threshold, generate a modified network configuration including a reallocation of network resources to the network slice. In some implementations, the instructions cause the one or more processors to determine that a mobile device is registered for the network slice by monitoring a network slice registration message exchanged between the mobile device and an access and mobility management function (AMF), wherein the registration message includes the network slice identifier of the network slice.

Aspects of the present disclosure are directed to a computer-implemented method for generating network slice-specific metrics based on network slice registration, the method including monitoring, by one or more processors, network slice registration messages exchanged between a mobile device and an access and mobility management function (AMF), wherein the registration messages include network slice identifiers, detecting, by the one or more processors, based on the monitoring of the registration messages, a registration request message from the mobile device to the AMF including a registration request including a network slice identifier of the network slice identifiers, detecting, by the one or more processors, based on the monitoring of the registration messages, a registration request response message from the AMF to the mobile device including a registration pending indication associated with the network slice identifier, detecting, by the one or more processors, based on the monitoring of the registration messages, a configuration update command including a registration acceptance associated with the network slice identifier, indicating registration of the mobile device for the network slice corresponding to the network slice identifier, and generating, by the one or more processors, a data set including network slice registration events for a plurality of mobile devices, the network slice registration events including registration of the mobile device with the network slice.

In some implementations, the method includes detecting, by the one or more processors, based on the monitoring of the registration messages, an authentication challenge from the AMF to the mobile device and an authentication challenge response from the mobile device to the AMF, wherein the AMF transmits the configuration update command to the mobile device in response to the authentication challenge response matching an expected value. In some implementations, the method includes detecting, by the one or more processors, based on the monitoring of the registration messages, a second registration request response message from the AMF to a second mobile device including a registration rejection associated with the network slice identifier, and detecting, by the one or more processors, based on the monitoring of the registration messages, a deregistration request from the AMF to the second mobile device including the network slice identifier, wherein the network slice registration events of the data set include the deregistration request to the second mobile device for the network slice and an associated deregistration cause code indicating unavailability of the network slice.

In some implementations, the method includes detecting, by the one or more processors, based on the monitoring of the registration messages, a second configuration update command including a registration rejection associated with the network slice identifier, wherein the network slice registration events of the data set include the registration rejection of the second mobile device for the network slice, and detecting, by the one or more processors, based on the monitoring of the registration messages, a deregistration request from the AMF to the second mobile device including the network slice identifier, wherein the network slice registration events of the data set include the deregistration request to the second mobile device for the network slice and an associated deregistration cause code indicating that the second mobile device is not authorized to use the network slice. In some implementations, the registration request message is a registration initiation request message to initiate use of the network slice by the mobile device or a registration mobility request message to continue use of the network slice by the mobile device.

In some implementations, the method includes intercepting the network slice registration messages at an N1 interface or an N2 interface of the AMF. In some implementations, the registration request message includes a plurality of network slice identifiers, wherein the registration request response message includes a registration acceptance indication, a registration pending indication, or a registration rejection indication for each of the plurality of network slice identifiers, and wherein the network slice registration events included in the data set include a registration or a deregistration for the mobile device for each of the plurality of network slices. In some implementations, the method includes, in response to a request from a client device including the network slice identifier, generating a visual representation using the data set, the visual representation indicating slice registration performance for the network slice.

Aspects of the present disclosure are directed to a network device for tracking network slice registration events, the network device including a network interface configured to receive a plurality of data packets from a wireless communication system including one or more network slices, and a metrics engine configured to monitor network slice registration messages exchanged between a mobile device and an access and mobility management function (AMF), wherein the registration messages include network slice identifiers, detect, based on the monitoring of the registration messages, a registration request message from the mobile device to the AMF including a registration request including a network slice identifier of the network slice identifiers, detect, based on the monitoring of the registration messages, a registration request response message from the AMF to the mobile device including a registration pending indication associated with the network slice identifier, detect, based on the monitoring of the registration messages, a configuration update command including a registration acceptance associated with the network slice identifier, indicating registration of the mobile device for the network slice corresponding to the network slice identifier, and generate a data set including network slice registration events for a plurality of mobile devices, the network slice registration events including registration of the mobile device with the network slice.

In some implementations, the metrics engine is further configured to detect, based on the monitoring of the registration messages, an authentication challenge from the AMF to the mobile device and an authentication challenge response from the mobile device to the AMF, wherein the AMF transmits the configuration update command to the mobile device in response to the authentication challenge response matching an expected value. In some implementations, the metrics engine is further configured to detect, based on the monitoring of the registration messages, a second registration request response message from the AMF to a second mobile device including a registration rejection associated with the network slice identifier, and detect, based on the monitoring of the registration messages, a deregistration request from the AMF to the second mobile device including the network slice identifier, wherein the network slice registration events of the data set include the deregistration request to the second mobile device for the network slice and an associated deregistration cause code indicating unavailability of the network slice.

In some implementations, the metrics engine is further configured to detect, based on the monitoring of the registration messages, a second configuration update command including a registration rejection associated with the network slice identifier, and detect, based on the monitoring of the registration messages, a deregistration request from the AMF to the second mobile device including the network slice identifier, wherein the network slice registration events of the data set include the deregistration request to the second mobile device for the network slice and an associated deregistration cause code indicating that the second mobile device is not authorized to use the network slice. In some implementations, the registration request message is a registration initiation request message to initiate use of the network slice by the mobile device or a registration mobility request message to continue use of the network slice by the mobile device.

In some implementations, the metrics engine is further configured to intercept the network slice registration messages at an N1 interface or an N2 interface of the AMF. In some implementations, the registration request message includes a plurality of network slice identifiers, wherein the registration request response message includes a registration acceptance indication, a registration pending indication, or a registration rejection indication for each of the plurality of network slice identifiers, and wherein the network slice registration events included in the data set include a registration or a deregistration for the mobile device for each of the plurality of network slices. In some implementations, the metrics engine is further configured to, in response to a request from a client device including the network slice identifier, generate a visual representation using the data set, the visual representation indicating slice registration performance for the network slice.

Aspects of the present disclosure are directed to a non-transitory, computer-readable medium including instructions which, when executed by one or more processors, cause the one or more processors to monitor network slice registration messages exchanged between a mobile device and an access and mobility management function (AMF), wherein the registration messages include network slice identifiers, detect, based on the monitoring of the registration messages, a registration request message from the mobile device to the AMF including a registration request including a network slice identifier of the network slice identifiers, detect, based on the monitoring of the registration messages, a registration request response message from the AMF to the mobile device including a registration pending indication associated with the network slice identifier, detect, based on the monitoring of the registration messages, a configuration update command including a registration acceptance associated with the network slice identifier, indicating registration of the mobile device for the network slice corresponding to the network slice identifier, and generate a data set including network slice registration events for a plurality of mobile devices, the network slice registration events including registration of the mobile device with the network slice.

In some implementations, the instructions cause the one or more processors to detect, based on the monitoring of the registration messages, an authentication challenge from the AMF to the mobile device and an authentication challenge response from the mobile device to the AMF, wherein the AMF transmits the configuration update command to the mobile device in response to the authentication challenge response matching an expected value. In some implementations, the instructions cause the one or more processors to detect, based on the monitoring of the registration messages, a second registration request response message from the AMF to a second mobile device including a registration rejection associated with the network slice identifier or a second configuration update command including a registration rejection associated with the network slice identifier, detect, based on the monitoring of the registration messages, a deregistration request from the AMF to the second mobile device including the network slice identifier, wherein the network slice registration events of the data set include the deregistration request to the second mobile device for the network slice and an associated deregistration cause code. In some implementations, the instructions cause the one or more processors to intercept the network slice registration messages at an N1 interface or an N2 interface of the AMF.

FIG. 8A depicts an example network environment that can be used in connection with the methods and systems described herein. In brief overview, the network environment 800 includes the devices 104 (also generally referred to as clients, client node, client machines, client computers, client computing devices, endpoints, or endpoint nodes) of FIG. 1 in communication with one or more servers 802 (also generally referred to as servers, nodes, or remote machine) via the 5G network 105 of FIG. 1. In some embodiments, a client device 104 has the capacity to function as both a client node seeking access to resources provided by a server and as a server providing access to hosted resources for other client devices 104.

Although FIG. 8A shows a 5G network 105 between the client devices 104 and the servers 802, the client devices 104 and the servers 802 can be on the same 5G network 105. In embodiments, there are multiple networks 105 between the client devices 104 and the servers 802. The 5G network 105 can include multiple networks such as a private network and a public network. The 5G network 105 can include multiple private networks.

The 5G network 105 can be connected via wired or wireless links. Wired links can include Digital Subscriber Line (DSL), coaxial cable lines, or optical fiber lines. The wireless links can include BLUETOOTH, Wi-Fi, Worldwide Interoperability for Microwave Access (WiMAX), an infrared channel or satellite band. The wireless links can also include any cellular network standards used to communicate among mobile devices, including standards that qualify as 1G, 2G, 3G, 4G, 5G or other standards. The network standards can qualify as one or more generation of mobile telecommunication standards by fulfilling a specification or standards such as the specifications maintained by International Telecommunication Union. Examples of cellular network standards include AMPS, GSM, GPRS, UMTS, LTE, LTE Advanced, Mobile WiMAX, and WiMAX-Advanced. Cellular network standards can use various channel access methods e.g. FDMA, TDMA, CDMA, or SDMA. In some embodiments, different types of data can be transmitted via different links and standards. In other embodiments, the same types of data can be transmitted via different links and standards.

The 5G network 105 can be any type and/or form of network. The geographical scope of the 5G network 105 can vary widely and the 5G network 105 can be a body area network (BAN), a personal area network (PAN), a local-area network (LAN), e.g. Intranet, a metropolitan area network (MAN), a wide area network (WAN), or the Internet. The topology of the 5G network 105 can be of any form and can include, e.g., any of the following: point-to-point, bus, star, ring, mesh, or tree. The 5G network 105 can be an overlay network which is virtual and sits on top of one or more layers of other networks 105. The 5G network 105 can be of any such network topology as known to those ordinarily skilled in the art capable of supporting the operations described herein. The 5G network 105 can utilize different techniques and layers or stacks of protocols, including, e.g., the Ethernet protocol or the internet protocol suite (TCP/IP). The TCP/IP internet protocol suite can include application layer, transport layer, internet layer (including, e.g., IPv6), or the link layer. The 5G network 105 can be a type of a broadcast network, a telecommunications network, a data communication network, or a computer network.

The network environment 800 can include multiple, logically grouped servers 802. The logical group of servers can be referred to as a data center 804 (or server farm or machine farm). In embodiments, the servers 802 can be geographically dispersed. The data center 804 can be administered as a single entity or different entities. The data center 804 can include multiple data centers 804 that can be geographically dispersed. The servers 802 within each data center 804 can be homogeneous or heterogeneous (e.g., one or more of the servers 802 or machines 802 can operate according to one type of operating system platform (e.g., WINDOWS NT, manufactured by Microsoft Corp. of Redmond, Washington), while one or more of the other servers 802 can operate on according to another type of operating system platform (e.g., Unix, Linux, or Mac OS X)). The servers 802 of each data center 804 do not need to be physically proximate to another server 802 in the same machine farm 804. Thus, the group of servers 802 logically grouped as a data center 804 can be interconnected using a network. Management of the data center 804 can be de-centralized. For example, one or more servers 802 can include components, subsystems and modules to support one or more management services for the data center 804.

Server 802 can be a file server, application server, web server, proxy server, appliance, network appliance, gateway, gateway server, virtualization server, deployment server, SSL VPN server, or firewall. In embodiments, the server 802 can be referred to as a remote machine or a node. Multiple nodes can be in the path between any two communicating servers.

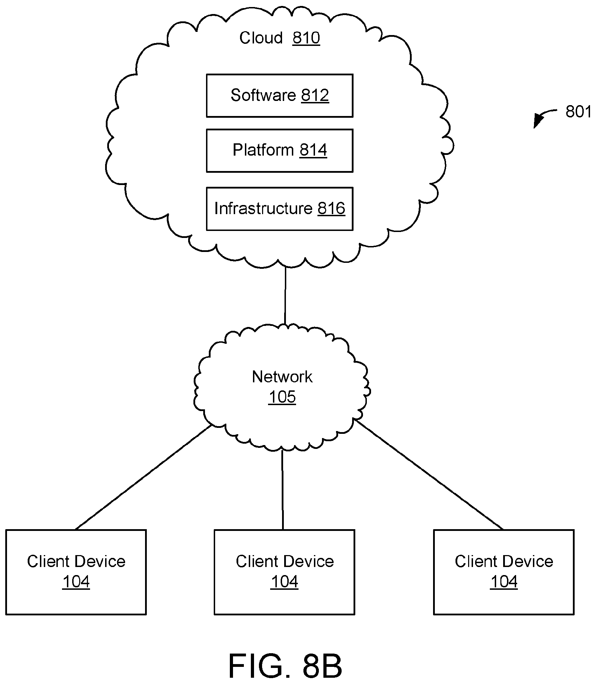

FIG. 8B illustrates an example cloud computing environment. A cloud computing environment 801 can provide the client device 104 with one or more resources provided by a network environment. The cloud computing environment 801 can include one or more client devices 104, in communication with the cloud 810 over the 5G network 105. Client devices 104 can include, e.g., thick clients, thin clients, and zero clients. A thick client can provide at least some functionality even when disconnected from the cloud 810 or servers 802. A thin client or a zero client can depend on the connection to the cloud 810 or server 802 to provide functionality. A zero client can depend on the cloud 810 or other networks 105 or servers 802 to retrieve operating system data for the client device. The cloud 810 can include back end platforms, e.g., servers 802, storage, and/or server farms or data centers.

The cloud 810 can be public, private, or hybrid. Public clouds can include public servers 802 that are maintained by third parties to the client devices 104 or the owners of the clients. The servers 802 can be located off-site in remote geographical locations as disclosed above or otherwise. Public clouds can be connected to the servers 802 over a public network. Private clouds can include private servers 802 that are physically maintained by client devices 104 or owners of clients. Private clouds can be connected to the servers 802 over a private 5G network 105. Hybrid clouds 804 can include both the private and public networks 105 and servers 802.

The cloud 810 can also include a cloud-based delivery, e.g. Software as a Service (SaaS) 812, Platform as a Service (PaaS) 814, and the Infrastructure as a Service (IaaS) 816. IaaS can refer to a user renting the use of infrastructure resources that are needed during a specified time period. IaaS providers can offer storage, networking, servers or virtualization resources from large pools, allowing the users to quickly scale up by accessing more resources as needed. PaaS providers can offer functionality provided by IaaS, including, e.g., storage, networking, servers or virtualization, as well as additional resources such as, e.g., the operating system, middleware, or runtime resources. SaaS providers can offer the resources that PaaS provides, including storage, networking, servers, virtualization, operating system, middleware, or runtime resources. In some embodiments, SaaS providers can offer additional resources including, e.g., data and application resources.

Client devices 104 can access IaaS resources, SaaS resources, or PaaS resources. In embodiments, access to IaaS, PaaS, or SaaS resources can be authenticated. For example, a server or authentication server can authenticate a user via security certificates, HTTPS, or API keys. API keys can include various encryption standards such as, e.g., Advanced Encryption Standard (AES). Data resources can be sent over Transport Layer Security (TLS) or Secure Sockets Layer (SSL).

The client device 104 and server 802 can be deployed as and/or executed on any type and form of computing device, e.g. a computer, network device or appliance capable of communicating on any type and form of network and performing the operations described herein.

FIG. 8C depicts block diagrams of a computing device 803 useful for practicing embodiments discussed herein. As shown in FIG. 8C, each computing device 803 can include a central processing unit 818, and a main memory unit 820. As shown in FIG. 8C, a computing device 803 can include one or more of a storage device 836, an installation device 832, a network interface 834, an I/O controller 822, a display device 830, a keyboard 824 or a pointing device 826, e.g. a mouse. The storage device 836 can include, without limitation, a program 840, such as an operating system, software, or software associated with system 100.

The central processing unit 818 is any logic circuitry that responds to and processes instructions fetched from the main memory unit 820. The central processing unit 818 can be provided by a microprocessor unit, e.g.: those manufactured by Intel Corporation. The computing device 803 can be based on any of these processors, or any other processor capable of operating as described herein. The central processing unit 818 can utilize instruction level parallelism, thread level parallelism, different levels of cache, and multi-core processors. A multi-core processor can include two or more processing units on a single computing component.

Main memory unit 820 can include one or more memory chips capable of storing data and allowing any storage location to be directly accessed by the microprocessor 818. Main memory unit 820 can be volatile and faster than storage 836 memory. Main memory units 820 can be Dynamic random access memory (DRAM) or any variants, including static random access memory (SRAM). The memory 820 or the storage 836 can be non-volatile; e.g., non-volatile read access memory (NVRAM). The memory 820 can be based on any type of memory chip, or any other available memory chips. In the example depicted in FIG. 8C, the processor 818 can communicate with memory 820 via a system bus 838.

A wide variety of I/O devices 828 can be present in the computing device 803. Input devices 828 can include keyboards, mice, trackpads, trackballs, touchpads, touch mice, multi-touch touchpads and touch mice, microphones, multi-array microphones, drawing tablets, cameras, or other sensors. Output devices can include video displays, graphical displays, speakers, headphones, or printers.

I/O devices 828 can have both input and output capabilities, including, e.g., haptic feedback devices, touchscreen displays, or multi-touch displays. Touchscreen, multi-touch displays, touchpads, touch mice, or other touch sensing devices can use different technologies to sense touch, including, e.g., capacitive, surface capacitive, projected capacitive touch (PCT), in-cell capacitive, resistive, infrared, waveguide, dispersive signal touch (DST), in-cell optical, surface acoustic wave (SAW), bending wave touch (BWT), or force-based sensing technologies. Some multi-touch devices can allow two or more contact points with the surface, allowing advanced functionality including, e.g., pinch, spread, rotate, scroll, or other gestures. Some touchscreen devices, including, e.g., Microsoft PIXELSENSE or Multi-Touch Collaboration Wall, can have larger surfaces, such as on a table-top or on a wall, and can also interact with other electronic devices. Some I/O devices 828, display devices 830 or group of devices can be augmented reality devices. The I/O devices can be controlled by an I/O controller 822 as shown in FIG. 8C. The I/O controller 822 can control one or more I/O devices, such as, e.g., a keyboard 824 and a pointing device 826, e.g., a mouse or optical pen. Furthermore, an I/O device can also provide storage and/or an installation device 832 for the computing device 803. In embodiments, the computing device 803 can provide USB connections (not shown) to receive handheld USB storage devices. In embodiments, an I/O device 828 can be a bridge between the system bus 838 and an external communication bus, e.g. a USB bus, a SCSI bus, a FireWire bus, an Ethernet bus, a Gigabit Ethernet bus, a Fibre Channel bus, or a Thunderbolt bus.

In embodiments, display devices 830 can be connected to I/O controller 822. Display devices can include, e.g., liquid crystal displays (LCD), electronic papers (e-ink) displays, flexile displays, light emitting diode displays (LED), or other types of displays. In some embodiments, display devices 830 or the corresponding I/O controllers 822 can be controlled through or have hardware support for OPENGL or DIRECTX API or other graphics libraries. Any of the I/O devices 828 and/or the I/O controller 822 can include any type and/or form of suitable hardware, software, or combination of hardware and software to support, enable or provide for the connection and use of one or more display devices 830 by the computing device 803. For example, the computing device 803 can include any type and/or form of video adapter, video card, driver, and/or library to interface, communicate, connect or otherwise use the display devices 830. In embodiments, a video adapter can include multiple connectors to interface to multiple display devices 830.

The computing device 803 can include a storage device 836 (e.g., one or more hard disk drives or redundant arrays of independent disks) for storing an operating system or other related software, and for storing application software programs 840 such as any program related to the systems, methods, components, modules, elements, or functions depicted in FIGS. 1, 2, or 3. Examples of storage device 836 include, e.g., hard disk drive (HDD); optical drive including CD drive, DVD drive, or BLU-RAY drive; solid-state drive (SSD); USB flash drive; or any other device suitable for storing data. Storage devices 836 can include multiple volatile and non-volatile memories, including, e.g., solid state hybrid drives that combine hard disks with solid state cache. Storage devices 836 can be non-volatile, mutable, or read-only. Storage devices 836 can be internal and connect to the computing device 803 via a bus 838. Storage device 836 can be external and connect to the computing device 803 via an I/O device 830 that provides an external bus. Storage device 836 can connect to the computing device 803 via the network interface 834 over a 5G network 105. Some client devices 104 may not require a non-volatile storage device 836 and can be thin clients or zero client devices 104. Some storage devices 836 can be used as an installation device 832 and can be suitable for installing software and programs.

The computing device 803 can include a network interface 834 to interface to the 5G network 105 through a variety of connections including, but not limited to, standard telephone lines LAN or WAN links (*e.g.,* 802.11, T1, T3, Gigabit Ethernet, Infiniband), broadband connections (e.g., ISDN, Frame Relay, ATM, Gigabit Ethernet, Ethernet-over-SONET, ADSL, VDSL, BPON, GPON, fiber optical including FiOS), wireless connections, or some combination of any or all of the above. Connections can be established using a variety of communication protocols (e.g., TCP/IP, Ethernet, ARCNET, SONET, SDH, Fiber Distributed Data Interface (FDDI), IEEE 802.11a/b/g/n/ac CDMA, GSM, WiMax and direct asynchronous connections). The computing device 803 can communicate with other computing devices 803 via any type and/or form of gateway or tunneling protocol e.g. Secure Socket Layer (SSL) or Transport Layer Security (TLS), QUIC protocol, or the Citrix Gateway Protocol manufactured by Citrix Systems, Inc. of Ft. Lauderdale, Florida. The network interface 834 can include a built-in network adapter, network interface card, PCMCIA network card, EXPRESSCARD network card, card bus network adapter, wireless network adapter, USB network adapter, modem or any other device suitable for interfacing the computing device 803 to any type of network capable of communication and performing the operations described herein.

A computing device 803 of the sort depicted in FIG. 8C can operate under the control of an operating system, which controls scheduling of tasks and access to system resources. The computing device 803 can be running any operating system configured for any type of computing device, including, for example, a desktop operating system, a mobile device operating system, a tablet operating system, or a smartphone operating system.

The computing device 803 can be any workstation, telephone, desktop computer, laptop or notebook computer, netbook, ULTRABOOK, tablet, server, handheld computer, mobile telephone, smartphone or other portable telecommunications device, media playing device, a gaming system, mobile computing device, or any other type and/or form of computing, telecommunications or media device that is capable of communication. The computing device 803 has sufficient processor power and memory capacity to perform the operations described herein. In some embodiments, the computing device 803 can have different processors, operating systems, and input devices consistent with the device.

In embodiments, the status of the servers 106, 802 in the 5G network 105 can be monitored as part of network management. In embodiments, the status of a machine can include an identification of load information (e.g., the number of processes on the machine, CPU and memory utilization), of port information (e.g., the number of available communication ports and the port addresses), or of session status (e.g., the duration and type of processes, and whether a process is active or idle). In another of these embodiments, this information can be identified by a plurality of metrics, and the plurality of metrics can be applied at least in part towards decisions in load distribution, network traffic management, and network failure recovery as well as any aspects of operations of the present solution described herein.

The processes, systems and methods described herein can be implemented by the computing device 803 in response to the CPU 818 executing an arrangement of instructions contained in main memory 820. Such instructions can be read into main memory 820 from another computer-readable medium, such as the storage device 836. Execution of the arrangement of instructions contained in main memory 820 causes the computing device 803 to perform the illustrative processes described herein. One or more processors in a multi-processing arrangement may also be employed to execute the instructions contained in main memory 820. Hard-wired circuitry can be used in place of or in combination with software instructions together with the systems and methods described herein. Systems and methods described herein are not limited to any specific combination of hardware circuitry and software.

Although an example computing system has been described in FIG. 8, the subject matter including the operations described in this specification can be implemented in other types of digital electronic circuitry, or in computer software, firmware, or hardware, including the structures disclosed in this specification and their structural equivalents, or in combinations of one or more of them.

The foregoing detailed description includes illustrative examples of various aspects and implementations and provides an overview or framework for understanding the nature and character of the claimed aspects and implementations. The drawings provide illustration and a further understanding of the various aspects and implementations and are incorporated in and constitute a part of this specification.

The subject matter and the operations described in this specification can be implemented in digital electronic circuitry, or in computer software, firmware, or hardware, including the structures disclosed in this specification and their structural equivalents, or in combinations of one or more of them. The subject matter described in this specification can be implemented as one or more computer programs, e.g., one or more circuits of computer program instructions, encoded on one or more computer storage media for execution by, or to control the operation of, data processing apparatuses. A computer storage medium can be, or be included in, a computer-readable storage device, a computer-readable storage substrate, a random or serial access memory array or device, or a combination of one or more of them. While a computer storage medium is not a propagated signal, a computer storage medium can be a source or destination of computer program instructions encoded in an artificially generated propagated signal. The computer storage medium can also be, or be included in, one or more separate components or media (e.g., multiple CDs, disks, or other storage devices). The operations described in this specification can be implemented as operations performed by a data processing apparatus on data stored on one or more computer-readable storage devices or received from other sources.

The terms "computing device" or "component" encompass various apparatuses, devices, and machines for processing data, including by way of example a programmable processor, a computer, a system on a chip, or multiple ones, or combinations of the foregoing. The apparatus can include special purpose logic circuitry, e.g., an FPGA (field programmable gate array) or an ASIC (application specific integrated circuit). The apparatus can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, app, script, or code) can be written in any form of programming language, including compiled or interpreted languages, declarative or procedural languages, and can be deployed in any form, including as a stand-alone program or as a module, component, subroutine, object, or other unit suitable for use in a computing environment. A computer program can correspond to a file in a file system. A computer program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs (e.g., components of the monitoring device 102) to perform actions by operating on input data and generating an output. The processes and logic flows can also be performed by, and apparatuses can also be implemented as, special purpose logic circuitry, e.g., an FPGA (field programmable gate array) or an ASIC (application specific integrated circuit). Devices suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto optical disks. The processor and the memory can be supplemented by, or incorporated in, special purpose logic circuitry.

While operations are depicted in the drawings in a particular order, such operations are not required to be performed in the particular order shown or in sequential order, and all illustrated operations are not required to be performed. Actions described herein can be performed in a different order. The separation of various system components does not require separation in all implementations, and the described program components can be included in a single hardware or software product.

The phraseology and terminology used herein is for the purpose of description and should not be regarded as limiting. Any references to implementations or elements or acts of the systems and methods herein referred to in the singular may also embrace implementations including a plurality of these elements, and any references in plural to any implementation or element or act herein may also embrace implementations including only a single element. Any implementation disclosed herein may be combined with any other implementation or embodiment.

References to "or" may be construed as inclusive so that any terms described using "or" may indicate any of a single, more than one, and all of the described terms. References to at least one of a conjunctive list of terms may be construed as an inclusive OR to indicate any of a single, more than one, and all of the described terms. For example, a reference to "at least one of 'A' and 'B'" can include only 'A', only 'B', as well as both 'A' and 'B'. Such references used in conjunction with "comprising" or other open terminology can include additional items.

The foregoing implementations are illustrative rather than limiting of the described systems and methods. Scope of the systems and methods described herein is thus indicated by the appended claims, rather than the foregoing description, and changes that come within the meaning and range of equivalency of the claims are embraced therein.

## Claims

1. A computer-implemented method for generating network slice-specific metrics based on
network slice registration, the method comprising:
monitoring, by one or more processors, network slice registration messages exchanged between a mobile device and an access and mobility management function (AMF), wherein the registration messages include network slice identifiers;
detecting, by the one or more processors, based on the monitoring of the registration messages, a registration request message from the mobile device to the AMF including a registration request including a network slice identifier of the network slice identifiers;
detecting, by the one or more processors, based on the monitoring of the registration messages, a registration request response message from the AMF to the mobile device including a registration pending indication associated with the network slice identifier;
detecting, by the one or more processors, based on the monitoring of the registration messages, a configuration update command including a registration acceptance associated with the network slice identifier, indicating registration of the mobile device for the network slice corresponding to the network slice identifier; and
generating, by the one or more processors, a data set including network slice registration events for a plurality of mobile devices, the network slice registration events including registration of the mobile device with the network slice.

2. The computer-implemented method of claim 1, further comprising detecting, by the one or more processors, based on the monitoring of the registration messages, an authentication challenge from the AMF to the mobile device and an authentication challenge response from the mobile device to the AMF, wherein the AMF transmits the configuration update command to the mobile device in response to the authentication challenge response matching an expected value.

3. The computer-implemented method of claim 1, further comprising:
detecting, by the one or more processors, based on the monitoring of the registration messages, a second registration request response message from the AMF to a second mobile device including a registration rejection associated with the network slice identifier; and
detecting, by the one or more processors, based on the monitoring of the registration messages, a deregistration request from the AMF to the second mobile device including the network slice identifier, wherein the network slice registration events of the data set include the deregistration request to the second mobile device for the network slice and an associated deregistration cause code indicating unavailability of the network slice.

4. The computer-implemented method of claim 1, further comprising:
detecting, by the one or more processors, based on the monitoring of the registration messages, a second configuration update command including a registration rejection associated with the network slice identifier, wherein the network slice registration events of the data set include the registration rejection of a second mobile device for the network slice; and
detecting, by the one or more processors, based on the monitoring of the registration messages, a deregistration request from the AMF to the second mobile device including the network slice identifier, wherein the network slice registration events of the data set include the deregistration request to the second mobile device for the network slice and an associated deregistration cause code indicating that the second mobile device is not authorized to use the network slice.

5. The computer-implemented method of claim 1, wherein the registration request message is a registration initiation request message to initiate use of the network slice by the mobile device or a registration mobility request message to continue use of the network slice by the mobile device.

6. The computer-implemented method of claim 1, further comprising:
intercepting the network slice registration messages at an N1 interface or an N2 interface of the AMF.

7. The computer-implemented method of claim 1, wherein the registration request message includes a plurality of network slice identifiers, wherein the registration request response message includes a registration acceptance indication, a registration pending indication, or a registration rejection indication for each of the plurality of network slice identifiers, and wherein the network slice registration events included in the data set include a registration or a deregistration for the mobile device for each of the plurality of network slices.

8. The computer-implemented method of claim 1, further comprising, in response to a request from a client device including the network slice identifier, generating a visual representation using the data set, the visual representation indicating slice registration performance for the network slice.

9. A network device for tracking network slice registration events, the network device comprising:
a network interface configured to receive a plurality of data packets from a wireless communication system including one or more network slices; and
a metrics engine configured to:
monitor network slice registration messages exchanged between a mobile device and an access and mobility management function (AMF), wherein the registration messages include network slice identifiers;
detect, based on the monitoring of the registration messages, a registration request message from the mobile device to the AMF including a registration request including a network slice identifier of the network slice identifiers;
detect, based on the monitoring of the registration messages, a registration request response message from the AMF to the mobile device including a registration pending indication associated with the network slice identifier;
detect, based on the monitoring of the registration messages, a configuration update command including a registration acceptance associated with the network slice identifier, indicating registration of the mobile device for the network slice corresponding to the network slice identifier; and
generate a data set including network slice registration events for a plurality of mobile devices, the network slice registration events including registration of the mobile device with the network slice.

10. The network device of claim 9, wherein the metrics engine is further configured to detect, based on the monitoring of the registration messages, an authentication challenge from the AMF to the mobile device and an authentication challenge response from the mobile device to the AMF, wherein the AMF transmits the configuration update command to the mobile device in response to the authentication challenge response matching an expected value.

11. The network device of claim 9, wherein the metrics engine is further configured to:
detect, based on the monitoring of the registration messages, a second registration request response message from the AMF to a second mobile device including a registration rejection associated with the network slice identifier; and
detect, based on the monitoring of the registration messages, a deregistration request from the AMF to the second mobile device including the network slice identifier, wherein the network slice registration events of the data set include the deregistration request to the second mobile device for the network slice and an associated deregistration cause code indicating unavailability of the network slice.

12. The network device of claim 9, wherein the metrics engine is further configured to:
detect, based on the monitoring of the registration messages, a second configuration update command including a registration rejection associated with the network slice identifier; and
detect, based on the monitoring of the registration messages, a deregistration request from the AMF to a second mobile device including the network slice identifier, wherein the network slice registration events of the data set include the deregistration request to the second mobile device for the network slice and an associated deregistration cause code indicating that the second mobile device is not authorized to use the network slice.

13. The network device of claim 9, wherein the registration request message is a registration initiation request message to initiate use of the network slice by the mobile device or a registration mobility request message to continue use of the network slice by the mobile device; and/or
wherein the metrics engine is further configured to:
intercept the network slice registration messages at an N1 interface or an N2 interface of the AMF; and/or
wherein the registration request message includes a plurality of network slice identifiers, wherein the registration request response message includes a registration acceptance indication, a registration pending indication, or a registration rejection indication for each of the plurality of network slice identifiers, and wherein the network slice registration events included in the data set include a registration or a deregistration for the mobile device for each of the plurality of network slices; and/or
wherein the metrics engine is further configured to, in response to a request from a client device including the network slice identifier, generate a visual representation using the data set, the visual representation indicating slice registration performance for the network slice.

14. A non-transitory, computer-readable medium including instructions which, when executed by one or more processors, cause the one or more processors to:
monitor network slice registration messages exchanged between a mobile device and an access and mobility management function (AMF), wherein the registration messages include network slice identifiers;
detect, based on the monitoring of the registration messages, a registration request message from the mobile device to the AMF including a registration request including a network slice identifier of the network slice identifiers;
detect, based on the monitoring of the registration messages, a registration request response message from the AMF to the mobile device including a registration pending indication associated with the network slice identifier;
detect, based on the monitoring of the registration messages, a configuration update command including a registration acceptance associated with the network slice identifier, indicating registration of the mobile device for the network slice corresponding to the network slice identifier; and
generate a data set including network slice registration events for a plurality of mobile devices, the network slice registration events including registration of the mobile device with the network slice.

15. The non-transitory, computer-readable medium of claim 17, wherein the instructions cause the one or more processors to detect, based on the monitoring of the registration messages, an authentication challenge from the AMF to the mobile device and an authentication challenge response from the mobile device to the AMF, wherein the AMF transmits the configuration update command to the mobile device in response to the authentication challenge response matching an expected value; and/or
wherein the instructions cause the one or more processors to:
detect, based on the monitoring of the registration messages, a second registration request response message from the AMF to a second mobile device including a registration rejection associated with the network slice identifier or a second configuration update command including a registration rejection associated with the network slice identifier;
detect, based on the monitoring of the registration messages, a deregistration request from the AMF to the second mobile device including the network slice identifier, wherein the network slice registration events of the data set include the deregistration request to the second mobile device for the network slice and an associated deregistration cause code; and/or
wherein the instructions cause the one or more processors to intercept the network slice registration messages at an N1 interface or an N2 interface of the AMF.

## Amended claims

### Amended claims in accordance with Rule 137(2) EPC.

1. A computer-implemented method for generating network slice-specific metrics based on network slice registration, the method comprising:
monitoring, by one or more processors (110), network slice registration messages exchanged between a mobile device (104) and an access and mobility management function, AMF, wherein the registration messages include network slice identifiers;
detecting, by the one or more processors (110), based on the monitoring of the registration messages, a registration request message from the mobile device (104) to the AMF including a registration request including a network slice identifier of the network slice identifiers;
detecting, by the one or more processors (110), based on the monitoring of the registration messages, a registration request response message from the AMF to the mobile device (104) including a registration pending indication associated with the network slice identifier;
detecting, by the one or more processors (110), based on the monitoring of the registration messages, a configuration update command including a registration acceptance associated with the network slice identifier for which the registration pending indication was detected, the configuration update command corresponding to the registration request message, indicating registration of the mobile device (104) for the network slice corresponding to the network slice identifier; and
generating, by the one or more processors (110), a data set including network slice registration events for a plurality of mobile devices (104), the network slice registration events including registration of the mobile device (104) with the network slice; and
generating, by the one or more processors (110), network slice registration metrics based on the network slice registration events, the network slice registration metrics indicating how many registration attempts were performed and how many of the registration attempts were successful.

2. The computer-implemented method of claim 1, further comprising detecting, by the one or more processors (110), based on the monitoring of the registration messages, an authentication challenge from the AMF to the mobile device (104) and an authentication challenge response from the mobile device (104) to the AMF, wherein the AMF transmits the configuration update command to the mobile device (104) in response to the authentication challenge response matching an expected value.

3. The computer-implemented method of claim 1, further comprising:
detecting, by the one or more processors (110), based on the monitoring of the registration messages, a second registration request response message from the AMF to a second mobile device (104) including a registration rejection associated with the network slice identifier; and
detecting, by the one or more processors (110), based on the monitoring of the registration messages, a deregistration request from the AMF to the second mobile device (104) including the network slice identifier, wherein the network slice registration events of the data set include the deregistration request to the second mobile device (104) for the network slice and an associated deregistration cause code indicating unavailability of the network slice.

4. The computer-implemented method of claim 1, further comprising:
detecting, by the one or more processors (110), based on the monitoring of the registration messages, a second configuration update command including a registration rejection associated with the network slice identifier, wherein the network slice registration events of the data set include the registration rejection of a second mobile device (104) for the network slice; and
detecting, by the one or more processors (110), based on the monitoring of the registration messages, a deregistration request from the AMF to the second mobile device (104) including the network slice identifier, wherein the network slice registration events of the data set include the deregistration request to the second mobile device (104) for the network slice and an associated deregistration cause code indicating that the second mobile device (104) is not authorized to use the network slice.

5. The computer-implemented method of claim 1, wherein the registration request message is a registration initiation request message to initiate use of the network slice by the mobile device (104) or a registration mobility request message to continue use of the network slice by the mobile device (104).

6. The computer-implemented method of claim 1, further comprising:
intercepting the network slice registration messages at an N1 interface or an N2 interface of the AMF.

7. The computer-implemented method of claim 1, wherein the registration request message includes a plurality of network slice identifiers, wherein the registration request response message includes a registration acceptance indication, a registration pending indication, or a registration rejection indication for each of the plurality of network slice identifiers, and wherein the network slice registration events included in the data set include a registration or a deregistration for the mobile device (104) for each of the plurality of network slices.

8. The computer-implemented method of claim 1, further comprising, in response to a request from a client device including the network slice identifier, generating a visual representation using the data set, the visual representation indicating slice registration performance for the network slice.

9. A network device (102) for tracking network slice registration events, the network device (102) comprising:
a network interface (108) configured to receive a plurality of data packets from a wireless communication system including one or more network slices; and
a metrics engine (116) configured to:
monitor network slice registration messages exchanged between a mobile device (104) and an access and mobility management function, AMF, wherein the registration messages include network slice identifiers;
detect, based on the monitoring of the registration messages, a registration request message from the mobile device (104) to the AMF including a registration request including a network slice identifier of the network slice identifiers;
detect, based on the monitoring of the registration messages, a registration request response message from the AMF to the mobile device (104) including a registration pending indication associated with the network slice identifier;
detect, based on the monitoring of the registration messages, a configuration update command including a registration acceptance associated with the network slice identifier for which the registration pending indication was detected, the configuration update command corresponding to the registration request message, indicating registration of the mobile device (104) for the network slice corresponding to the network slice identifier; and
generate a data set including network slice registration events for a plurality of mobile devices (104), the network slice registration events including registration of the mobile device (104) with the network slice; and
generate network slice registration metrics based on the network slice registration events, the network slice registration metrics indicating how many registration attempts were performed and how many of the registration attempts were successful.

10. The network device (102) of claim 9, wherein the metrics engine (116) is further configured to detect, based on the monitoring of the registration messages, an authentication challenge from the AMF to the mobile device (104) and an authentication challenge response from the mobile device (104) to the AMF, wherein the AMF transmits the configuration update command to the mobile device (104) in response to the authentication challenge response matching an expected value.

11. The network device (102) of claim 9, wherein the metrics engine (116) is further configured to:
detect, based on the monitoring of the registration messages, a second registration request response message from the AMF to a second mobile device (104) including a registration rejection associated with the network slice identifier; and
detect, based on the monitoring of the registration messages, a deregistration request from the AMF to the second mobile device (104) including the network slice identifier, wherein the network slice registration events of the data set include the deregistration request to the second mobile device (104) for the network slice and an associated deregistration cause code indicating unavailability of the network slice.

12. The network device (102) of claim 9, wherein the metrics engine (116) is further configured to:
detect, based on the monitoring of the registration messages, a second configuration update command including a registration rejection associated with the network slice identifier; and
detect, based on the monitoring of the registration messages, a deregistration request from the AMF to a second mobile device (104) including the network slice identifier, wherein the network slice registration events of the data set include the deregistration request to the second mobile device (104) for the network slice and an associated deregistration cause code indicating that the second mobile device (104) is not authorized to use the network slice.

13. The network device (102) of claim 9, wherein the registration request message is a registration initiation request message to initiate use of the network slice by the mobile device (104) or a registration mobility request message to continue use of the network slice by the mobile device (104); and/or
wherein the metrics engine (116) is further configured to:
intercept the network slice registration messages at an N1 interface or an N2 interface of the AMF; and/or
wherein the registration request message includes a plurality of network slice identifiers, wherein the registration request response message includes a registration acceptance indication, a registration pending indication, or a registration rejection indication for each of the plurality of network slice identifiers, and wherein the network slice registration events included in the data set include a registration or a deregistration for the mobile device (104) for each of the plurality of network slices; and/or
wherein the metrics engine (116) is further configured to, in response to a request from a client device including the network slice identifier, generate a visual representation using the data set, the visual representation indicating slice registration performance for the network slice.

14. A non-transitory, computer-readable medium including instructions which, when executed by one or more processors (110), cause the one or more processors (110) to:
monitor network slice registration messages exchanged between a mobile device (104) and an access and mobility management function, AMF, wherein the registration messages include network slice identifiers;
detect, based on the monitoring of the registration messages, a registration request message from the mobile device (104) to the AMF including a registration request including a network slice identifier of the network slice identifiers;
detect, based on the monitoring of the registration messages, a registration request response message from the AMF to the mobile device (104) including a registration pending indication associated with the network slice identifier;
detect, based on the monitoring of the registration messages, a configuration update command including a registration acceptance associated with the network slice identifier for which the registration pending indication was detected, the configuration update command corresponding to the registration request message, indicating registration of the mobile device (104) for the network slice corresponding to the network slice identifier; and
generate a data set including network slice registration events for a plurality of mobile devices (104), the network slice registration events including registration of the mobile device (104) with the network slice; and
generate network slice registration metrics based on the network slice registration events, the network slice registration metrics indicating how many registration attempts were performed and how many of the registration attempts were successful.

15. The non-transitory, computer-readable medium of claim 14, wherein the instructions cause the one or more processors (110) to detect, based on the monitoring of the registration messages, an authentication challenge from the AMF to the mobile device (104) and an authentication challenge response from the mobile device (104) to the AMF, wherein the AMF transmits the configuration update command to the mobile device (104) in response to the authentication challenge response matching an expected value; and/or
wherein the instructions cause the one or more processors (110) to:
detect, based on the monitoring of the registration messages, a second registration request response message from the AMF to a second mobile device (104) including a registration rejection associated with the network slice identifier or a second configuration update command including a registration rejection associated with the network slice identifier;
detect, based on the monitoring of the registration messages, a deregistration request from the AMF to the second mobile device (104) including the network slice identifier, wherein the network slice registration events of the data set include the deregistration request to the second mobile device (104) for the network slice and an associated deregistration cause code; and/or
wherein the instructions cause the one or more processors (110) to intercept the network slice registration messages at an N1 interface or an N2 interface of the AMF.
